(19) Europäisches Patentamt
European Patent Office
Office européen des brevets

(11) **EP 4 572 275 A1**

(12) **EUROPEAN PATENT APPLICATION**
published in accordance with Art. 153(4) EPC

(43) Date of publication:
**18.06.2025 Bulletin 2025/25**

(51) International Patent Classification (IPC):
**H04L 27/26** (2006.01)

(21) Application number: **23858900.6**

(52) Cooperative Patent Classification (CPC):
**H04B 1/707; H04L 27/26; H04W 8/24**

(22) Date of filing: **29.06.2023**

(86) International application number:
**PCT/CN2023/104244**

(87) International publication number:
**WO 2024/045862 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.08.2022 CN 202211036197**

(71) Applicant: **Huawei Technologies Co., Ltd.**
**Shenzhen, Guangdong 518129 (CN)**

(72) Inventors:
• **HAN, Chengcheng**
  **Shenzhen, Guangdong 518129 (CN)**
• **GUO, Zhiheng**
  **Shenzhen, Guangdong 518129 (CN)**
• **XIE, Xinqian**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS, STORAGE MEDIUM, AND SYSTEM**

(57) Embodiments of this application relate to the field of communication technologies, and disclose a communication method, apparatus, and system, and a storage medium, to resolve a problem of how to adjust a frequency domain signal by using a spectral extension technology. The method includes: A terminal device receives first indication information from an access network device (S601), and sends, based on the first indication information, spectral extension information or indication information indicating that the terminal device does not support spectral extension to the access network device (S602). The first indication information indicates the terminal device to send the spectral extension information. The spectral extension information is used to demodulate a first frequency domain signal. The first frequency domain signal is a frequency domain signal obtained by performing discrete Fourier transform on data transmitted between the terminal device and the access network device. Embodiments of this application are applied to a process of adjusting the frequency domain signal by using the spectral extension technology.

FIG. 6

**EP 4 572 275 A1**

## Description

This application claims priority to Chinese Patent Application No. 202211036197.5, filed with the China National Intellectual Property Administration on August 27, 2022 and entitled "COMMUNICATION METHOD, APPARATUS, AND SYSTEM, AND STORAGE MEDIUM", which is incorporated herein by reference in its entirety.

## TECHNICAL FIELD

Embodiments of this application relate to the field of communication technologies, and in particular, to a communication method, apparatus, and system, and a storage medium.

## BACKGROUND

Currently, a frequency domain signal is adjusted by using a spectral extension (spectral extension, SE) technology, so that a peak-to-average power ratio (peak-to-average power ratio, PAPR) of a signal transmitted between a terminal device and an access network device can be reduced, thereby improving a network coverage capability.
However, in a communication system, currently, there is no related solution to how to adjust the frequency domain signal by using the SE technology.

## SUMMARY

Embodiments of this application provide a communication method, apparatus, and system, and a storage medium, to adjust a frequency domain signal by using an SE technology.
To achieve the foregoing objective, embodiments of this application provide the following technical solutions.
According to a first aspect, a communication method is provided. The method may be performed by a terminal device, or may be performed by a component of the terminal device, for example, a processor, a chip, or a chip system of the terminal device, or may be implemented by a logical module or software that can implement all or a part of functions of the terminal device. The following uses an example in which the method is performed by the terminal device for description. The communication method includes: The terminal device receives first indication information from an access network device, and sends, based on the first indication information, SE information or indication information indicating that the terminal device does not support SE to the access network device. The first indication information indicates the terminal device to send the SE information. The SE information is used to demodulate a first frequency domain signal. The first frequency domain signal is a frequency domain signal obtained by performing discrete Fourier transform on data transmitted between the terminal device and the access network device. According to the foregoing method, because the access network device may learn of information about whether a terminal device supports SE, the access network device can indicate a terminal device that supports SE to perform spectral extension on the first frequency domain signal based on the SE information, that is, may adjust the first frequency domain signal by using the SE technology. In addition, the access network device may further demodulate the first frequency domain signal based on the SE information.
In a possible implementation, the SE information indicates a first ratio. The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition. Based on this solution, the access network device may obtain the first ratio indicated by the SE information of the terminal device, and then the access network device may demodulate the first frequency domain signal based on the first ratio indicated by the terminal device. In this way, the first frequency domain signal can be demodulated more accurately, so that the access network device can obtain accurate data sent by the terminal device.
In a possible implementation, the SE information further indicates a symbol location. The symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol in the first frequency domain signal. Based on this solution, the access network device may further obtain the symbol location indicated by the SE information of the terminal device, and then the access network device may demodulate the first frequency domain signal based on the first ratio and the symbol location that are indicated by the terminal device. In this way, the first frequency domain signal can be demodulated more accurately, so that the access network device can obtain accurate data sent by the terminal device.
In a possible implementation, the SE information indicates type information. The type information represents a type of a frequency-domain spectral shaping (frequency-domain spectral shaping, FDSS) filter of the terminal device, and a type of one FDSS filter corresponds to one or more first ratios and one or more symbol locations. The first ratio is the ratio of the quantity of first spectrum resources to the quantity of spectrum resources occupied by the first frequency domain signal. The quantity of first spectrum resources is the quantity of spectrum resources to be extended for the first frequency domain signal when the coverage indicator of the terminal device at the first moment meets the first indicator condition. The symbol location is the ratio of the quantity of spectrum resources to be extended before the $1^{st}$ subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal. Based on this solution, the access network device may obtain the type information indicated by the SE information of the terminal device, and then the access network device can determine the first ratio and the symbol location based on the type information. In this way, the access network device can demodulate the first frequency domain signal based on the first ratio and the symbol location, so that the access network device can demodulate the first frequency domain signal more accurately, and then obtain accurate data sent by the terminal device.

In a possible implementation, the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal. Based on this solution, the access network device may learn, based on the third ratio, a difference between a power of data carried on the first spectrum resource and a power of data carried on the second spectrum resource, then better control a power of an extended first frequency domain signal based on the difference between the power of the data carried on the first spectrum resource and the power of the data carried on the second spectrum resource, and further determine a demodulation mode for the first frequency domain signal based on the third ratio, so that the access network device can better demodulate the first frequency domain signal.

In a possible implementation, the communication method provided in embodiments of this application further includes: The terminal device receives second indication information from the access network device. The second indication information indicates the terminal device to dynamically report a second ratio. The second ratio is a ratio of a quantity of second spectrum resources to the quantity of spectrum resources occupied by the first frequency domain signal. The quantity of second spectrum resources is a quantity of spectrum resources to be extended for the first frequency domain signal when the coverage indicator of the terminal device meets the first indicator condition. Based on this solution, the access network device may indicate the terminal device to dynamically report the second ratio, so that the access network device can subsequently dynamically obtain second ratios at different moments, and the access network device can demodulate the first frequency domain signal based on a latest second ratio. In this way, the access network device can demodulate the first frequency domain signal more accurately, and then obtain accurate data sent by the terminal device.

Optionally, the second indication information may alternatively indicate the terminal device not to dynamically report a second ratio. Based on this solution, the access network device indicates, through the second indication information, the terminal device whether to dynamically report the second ratio, so that utilization of an uplink resource can be effectively controlled, and then resource utilization of the uplink resource in a communication system is improved.

In a possible implementation, the communication method provided in embodiments of this application further includes: The terminal device periodically sends the second ratio to the access network device when a transmission resource of the terminal device includes an uplink resource. A time interval at which the second ratio is sent is equal to first preset duration. Based on this solution, the terminal device periodically reports the second ratio, so that the access network device can subsequently periodically obtain second ratios at different moments, and the access network device can demodulate the first frequency domain signal based on a latest second ratio. In this way, the access network device can demodulate the first frequency domain signal more accurately, and then obtain accurate data sent by the terminal device.

In a possible implementation, the communication method provided in embodiments of this application further includes: The terminal device receives third indication information from the access network device. The third indication information indicates the first preset duration. Based on this solution, the terminal device can obtain the first preset duration, so that the terminal device can periodically report the second ratio based on the first preset duration.

In a possible implementation, the communication method provided in embodiments of this application further includes: The terminal device sends the second ratio to the access network device when a change value of the second ratio is greater than or equal to a preset threshold and the transmission resource of the terminal device includes the uplink resource. Because a change in a channel state, a modulation mode, or FDSS information causes a change in the second ratio, when the second ratio changes greatly, if the access network device still demodulates the first frequency domain signal based on a previously reported second ratio, the access network device fails to demodulate the first frequency domain signal or demodulates the first frequency domain signal inaccurately. Consequently, the access network device cannot obtain accurate data sent by the terminal device. Based on this solution, the terminal device may send the second ratio to the access network device when the change value of the second ratio is greater than or equal to the preset threshold and the transmission resource of the terminal device includes the uplink resource, so that the access network device can obtain, in time, a second ratio that changes greatly, and demodulate the first frequency domain signal based on the second ratio. In this way, the access network device can demodulate the first frequency domain signal more accurately, and then obtain accurate data sent by the terminal device.

In a possible implementation, the communication method provided in embodiments of this application further includes: The terminal device receives fourth indication information from the access network device. The fourth indication information indicates the preset threshold. Based on this solution, the terminal device can obtain the preset threshold, and then the terminal device can report the second ratio based on the preset threshold.

In a possible implementation, the first indicator condition is that the coverage indicator is between a first indicator and a second indicator. Alternatively, the first indicator condition is that the coverage indicator is a first indicator and/or a second indicator. The first indicator is a coverage indicator of the terminal device when a coverage capability of the terminal device is the strongest, and the second indicator is a coverage indicator of the terminal device when the coverage capability of the terminal device is a preset coverage capability. This solution provides a plurality of types of first indicator conditions, so that embodiments of this application can be applied to a plurality of communication scenarios.

It can be learned from the foregoing descriptions that the coverage indicator may be the first indicator, or may be the second indicator. Different coverage indicators bring different beneficial effects. For example, when the coverage indicator is the first indicator, the access network device may indicate, based on the first ratio or the second ratio in this case, the terminal device to extend the first frequency domain signal. In this way, a coverage capability of a communication link for transmitting the first frequency domain signal can be extended to the highest. For another example, when the coverage indicator is the first indicator, the access network device may extend the first frequency domain signal based on the first ratio or the second ratio in this case. In this way, not only a coverage capability of a communication link for transmitting the first frequency domain signal can be improved, but also a bandwidth resource of a communication system can be efficiently occupied. Therefore, the bandwidth resource of the communication system is saved, and spectrum resource utilization is improved. The terminal device reports the symbol location, so that the access network device can indicate the terminal device to demodulate the first frequency domain signal or determine the extended first frequency domain signal based on the symbol location, to implement spectral extension of the first frequency domain signal, so as to improve a coverage capability.

In a possible implementation, the third indication information includes the first preset duration. Alternatively, the third indication information includes a first weight value, and the first weight value is used to determine the first preset duration. This solution provides a plurality of types of third indication information, so that embodiments of this application can be applied to a plurality of communication scenarios.

In a possible implementation, the fourth indication information includes the preset threshold. Alternatively, the fourth indication information includes a second weight value, and the second weight value is used to determine the preset threshold. This solution provides a plurality of types of fourth indication information, so that embodiments of this application can be applied to a plurality of communication scenarios.

In a possible implementation, the second indication information is carried in downlink control information, and the first indication information is carried in a user equipment capability enquiry message.

According to a second aspect, a communication method is provided. The method may be performed by an access network device, or may be performed by a component of the access network device, for example, a processor, a chip, or a chip system of the access network device, or may be implemented by a logical module or software that can implement all or a part of the functions of the terminal device. The following uses an example in which the method is performed by the access network device for description. The communication method includes: The access network device sends first indication information to a terminal device, and receives indication information indicating that SE is not supported from the terminal device, or receives SE information from the terminal device. The first indication information indicates the terminal device to send the SE information. The SE information is used to demodulate a first frequency domain signal. The first frequency domain signal is a frequency domain signal obtained by performing discrete Fourier transform on data transmitted between the terminal device and the access network device.

In a possible implementation, the SE information indicates a first ratio. The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition.

In a possible implementation, the communication method provided in embodiments of this application further includes: The access network device may demodulate the first frequency domain signal based on the first ratio and a preconfigured symbol location. The symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

In a possible implementation, the SE information further indicates a symbol location. The symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

In a possible implementation, the communication method provided in embodiments of this application further includes: The access network device may demodulate the first frequency domain signal based on the first ratio and the symbol location.

In a possible implementation, the SE information indicates type information. The type information represents a type of an FDSS filter of the terminal device, and a type of one FDSS filter corresponds to one or more first ratios and one or more symbol locations. The first ratio is the ratio of the quantity of first spectrum resources to the quantity of spectrum resources occupied by the first frequency domain signal. The quantity of first spectrum resources is the quantity of spectrum resources to be extended for the first frequency domain signal when the coverage indicator of the terminal device at the first moment meets the first indicator condition. The symbol location is the ratio of the quantity of spectrum resources to be extended before the $1^{st}$ subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal. In a possible implementation, the communication method provided in embodiments of this application further includes: The access network device may determine a target first ratio and a target symbol location from the one or more first ratios and the one or more symbol locations corresponding to the type of the FDSS filter, and demodulate the first frequency domain signal based on the target first ratio and the target symbol location.

In a possible implementation, the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

In a possible implementation, the communication method provided in embodiments of this application further includes: The access network device determines the target first ratio, the target symbol location, and a target third ratio from the one or more first ratios, the one or more symbol locations, and the one or more third ratios corresponding to the type of the FDSS filter, and demodulates the first frequency domain signal based on the target first ratio, the target symbol location, and the target third ratio.

In a possible implementation, the communication method provided in embodiments of this application further includes: The access network device sends second indication information to the terminal device. The second indication information indicates the terminal device to dynamically report a second ratio. The second ratio is a ratio of a quantity of second spectrum resources to the quantity of spectrum resources occupied by the first frequency domain signal, where the quantity of second spectrum resources is a quantity of spectrum resources to be extended for the first frequency domain signal when the coverage indicator of the terminal device meets the first indicator condition. In a possible implementation, the communication method provided in embodiments of this application further includes: The access network device periodically receives the second ratio from the terminal device, and demodulates the first frequency domain signal based on the second ratio. A time interval at which the second ratio is received is equal to first preset duration.

In a possible implementation, the communication method provided in embodiments of this application further includes: The access network device sends third indication information to the terminal device. The third indication information indicates the first preset duration.

In a possible implementation, the communication method provided in embodiments of this application further includes: The access network device receives the second ratio from the terminal device, and demodulates the first frequency domain signal based on the second ratio. A change value of the second ratio is greater than or equal to a preset threshold.

In a possible implementation, the communication method provided in embodiments of this application further includes: The access network device sends fourth indication information to the terminal device. The fourth indication information indicates the preset threshold.

In a possible implementation, the first indicator condition is that the coverage indicator is between a first indicator and a second indicator. Alternatively, the first indicator condition is that the coverage indicator is a first indicator and/or a second indicator. The first indicator is a coverage indicator of the terminal device when a coverage capability of the terminal device is the strongest, and the second indicator is a coverage indicator of the terminal device when the coverage capability of the terminal device is a preset coverage capability.

In a possible implementation, the third indication information includes the first preset duration. Alternatively, the third indication information includes a first weight value, and the first weight value is used to determine the first preset duration.

In a possible implementation, the fourth indication information includes the preset threshold. Alternatively, the fourth indication information includes a second weight value, and the second weight value is used to determine the preset threshold.

In a possible implementation, the second indication information is carried in downlink control information, and the first indication information is carried in a user equipment capability enquiry message.

According to a third aspect, a communication apparatus is provided, and includes a communication unit and a processing unit. The processing unit is configured to indicate the communication unit to perform the following actions: receiving first indication information from an access network device, and sending, based on the first indication information, SE information or indication information indicating that a terminal device does not support SE to the access network device. The first indication information indicates the terminal device to send the SE information. The SE information is used to demodulate a first frequency domain signal. The first frequency domain signal is a frequency domain signal obtained by performing discrete Fourier transform on data transmitted between the terminal device and the access network device.

In a possible implementation, the SE information indicates a first ratio. The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition.

In a possible implementation, the SE information further indicates a symbol location. The symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol in the first frequency domain signal.

In a possible implementation, the SE information indicates type information. The type information represents a type of an FDSS filter of the terminal device, and a type of one FDSS filter corresponds to one or more first ratios and one or more symbol locations. The first ratio is the ratio of the quantity of first spectrum resources to the quantity of spectrum resources occupied by the first frequency domain signal. The quantity of first spectrum resources is the quantity of spectrum resources to be extended for the first frequency domain signal when the coverage indicator of the terminal device at the first moment meets the first indicator condition. The symbol location is the ratio of the quantity of spectrum resources to be extended before the $1^{st}$ subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal.

In a possible implementation, the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

In a possible implementation, the processing unit is further configured to indicate the communication unit to receive second indication information from the access network device. The second indication information indicates the terminal device to dynamically report a second ratio. The second ratio is a ratio of a quantity of second spectrum resources to the quantity of spectrum resources occupied by the first frequency domain signal. The quantity of second spectrum resources is a quantity of spectrum resources to be extended for the first frequency domain signal when the coverage indicator of the terminal device meets the first indicator condition.

In a possible implementation, the processing unit is further configured to indicate the communication unit to periodically send the second ratio to the access network device when a transmission resource of the terminal device includes an uplink resource. A time interval at which the second ratio is sent is equal to first preset duration.

In a possible implementation, the processing unit is further configured to indicate the communication unit to receive third indication information from the access network device. The third indication information indicates the first preset duration.

In a possible implementation, the processing unit is further configured to indicate the communication unit to send the second ratio to the access network device when a change value of the second ratio is greater than or equal to a preset threshold and the transmission resource of the terminal device includes the uplink resource.

In a possible implementation, the processing unit is further configured to indicate the communication unit to receive fourth indication information from the access network device. The fourth indication information indicates the preset threshold.

In a possible implementation, the first indicator condition is that the coverage indicator is between a first indicator and a second indicator. Alternatively, the first indicator condition is that the coverage indicator is a first indicator and/or a second indicator. The first indicator is a coverage indicator of the terminal device when a coverage capability of the terminal device is the strongest, and the second indicator is a coverage indicator of the terminal device when the coverage capability of the terminal device is a preset coverage capability.

In a possible implementation, the third indication information includes the first preset duration. Alternatively, the third indication information includes a first weight value, and the first weight value is used to determine the first preset duration.

In a possible implementation, the fourth indication information includes the preset threshold. Alternatively, the fourth indication information includes a second weight value, and the second weight value is used to determine the preset threshold.

In a possible implementation, the second indication information is carried in downlink control information, and the first indication information is carried in a user equipment capability enquiry message.

According to a fourth aspect, a communication apparatus is provided, and includes a communication unit and a processing unit. The processing unit is configured to indicate the communication unit to perform the following actions: sending first indication information to a terminal device, and receiving indication information indicating that SE is not supported from the terminal device, or receiving SE information from the terminal device. The first indication information indicates the terminal device to send the SE information. The SE information is used to demodulate a first frequency domain signal. The first frequency domain signal is a frequency domain signal obtained by performing discrete Fourier transform on data transmitted between the terminal device and the access network device.

In a possible implementation, the SE information indicates a first ratio. The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition.

In a possible implementation, the processing unit is further configured to demodulate the first frequency domain signal based on the first ratio and a preconfigured symbol location. The symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

In a possible implementation, the SE information further indicates a symbol location. The symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

In a possible implementation, the processing unit is further configured to demodulate the first frequency domain signal based on the first ratio and the symbol location.

In a possible implementation, the SE information indicates type information. The type information represents a type of an FDSS filter of the terminal device, and a type of one FDSS filter corresponds to one or more first ratios and one or more symbol locations. The first ratio is the ratio of the quantity of first spectrum resources to the quantity of spectrum resources occupied by the first frequency domain signal. The quantity of first spectrum resources is the quantity of spectrum resources to be extended for the first frequency domain signal when the coverage indicator of the terminal device at the first moment meets the first indicator condition. The symbol location is the ratio of the quantity of spectrum resources to be extended before the $1^{st}$ subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal.

In a possible implementation, the processing unit is further configured to perform the following operations: determining a target first ratio and a target symbol location from the one or more first ratios and the one or more symbol locations corresponding to the type of the FDSS filter, and demodulating the first frequency domain signal based on the target first ratio and the target symbol location.

In a possible implementation, the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

In a possible implementation, the processing unit is further configured to perform the following operations: determining the target first ratio, the target symbol location, and a target third ratio from the one or more first ratios, the one or more symbol locations, and the one or more third ratios corresponding to the type of the FDSS filter, and demodulating the first frequency domain signal based on the target first ratio, the target symbol location, and the target third ratio.

In a possible implementation, the processing unit is further configured to indicate the communication unit to send second indication information to the terminal device. The second indication information indicates the terminal device to dynamically report a second ratio. The second ratio is a ratio of a quantity of second spectrum resources to the quantity of spectrum resources occupied by the first frequency domain signal, where the quantity of second spectrum resources is a quantity of spectrum resources to be extended for the first frequency domain signal when the coverage indicator of the terminal device meets the first indicator condition.

In a possible implementation, the processing unit is further configured to indicate the communication unit to periodically receive the second ratio from the terminal device. A time interval at which the second ratio is received is equal to first preset duration. The processing unit is further configured to demodulate the first frequency domain signal based on the second ratio.

In a possible implementation, the processing unit is further configured to indicate the communication unit to send third indication information to the terminal device. The third indication information indicates the first preset duration.

In a possible implementation, the processing unit is further configured to indicate the communication unit to receive the second ratio from the terminal device. A change value of the second ratio is greater than or equal to a preset threshold. The processing unit is further configured to demodulate the first frequency domain signal based on the second ratio.

In a possible implementation, the processing unit is further configured to indicate the communication unit to send fourth indication information to the terminal device. The fourth indication information indicates the preset threshold.

In a possible implementation, the first indicator condition is that the coverage indicator is between a first indicator and a second indicator. Alternatively, the first indicator condition is that the coverage indicator is a first indicator and/or a second indicator. The first indicator is a coverage indicator of the terminal device when a coverage capability of the terminal device is the strongest, and the second indicator is a coverage indicator of the terminal device when the coverage capability of the terminal device is a preset coverage capability.

In a possible implementation, the third indication information includes the first preset duration. Alternatively, the third indication information includes a first weight value, and the first weight value is used to determine the first preset duration.

In a possible implementation, the fourth indication information includes the preset threshold. Alternatively, the fourth indication information includes a second weight value, and the second weight value is used to determine the preset threshold.

In a possible implementation, the second indication information is carried in downlink control information, and the first indication information is carried in a user equipment capability enquiry message.

According to a fifth aspect, a communication apparatus is provided, and includes a processor. The processor is connected to a memory, the memory is configured to store computer-executable instructions, and the processor executes the computer-executable instructions stored in the memory, to implement any method according to any one of the first aspect and the second aspect. The memory and the processor may be integrated together, or may be independent components. If the memory is an independent component, the memory may be located inside the communication apparatus, or may be located outside the communication apparatus.

In a possible implementation, the processor includes a logic circuit and an input interface and/or an output interface. The output interface is configured to perform a sending action in a corresponding method, and the input interface is configured to perform a receiving action in a corresponding method.

In a possible implementation, the communication apparatus further includes a communication interface and a communication bus, and the processor, the memory, and the communication interface are connected to each other through the communication bus. The communication interface is configured to perform a sending/receiving action in a corresponding method. The communication interface may also be referred to as a transceiver. Optionally, the communication interface includes a transmitter or a receiver. In this case, the transmitter is configured to perform the sending action in the corresponding method, and the receiver is configured to perform the receiving action in the corresponding method.

In a possible implementation, the communication apparatus exists in a product form of a chip.

According to a sixth aspect, a computer-readable storage medium is provided, including instructions. When the instructions are run on a computer, the computer is enabled to perform any method according to any one of the first aspect and the second aspect.

According to a seventh aspect, a computer program product including instructions is provided. When the instructions are run on a computer, the computer is enabled to perform any method according to any one of the first aspect and the second aspect.

According to an eighth aspect, a chip is provided, including a processor and an interface. The processor is coupled to a memory through the interface. When the processor executes a computer program or instructions in the memory, any method according to any one of the first aspect and the second aspect is performed.

According to a ninth aspect, a communication system is provided, including a terminal device configured to perform the communication method according to the first aspect and an access network device configured to perform the communication method according to the second aspect.

For technical effects brought by any implementation of the second aspect to the ninth aspect, refer to the technical effects brought by a corresponding implementation of the first aspect. Details are not described herein again.

It should be noted that various possible implementations of any one of the foregoing aspects may be combined provided that there is no conflict between the solutions.

## BRIEF DESCRIPTION OF DRAWINGS

FIG. 1 is a diagram of a curve of amplifying a power by a PA according to the conventional technology;

FIG. 2 is a flowchart of converting, by using a discrete Fourier transform spread orthogonal frequency division multiplexing (discrete Fourier transform spread orthogonal frequency division multiplexing, DFT-S-OFDM) technology, a data bit of a terminal device into an analog signal to be sent to an access network device according to the conventional technology;

FIG. 3 is a simplified diagram of spectral extension according to the conventional technology;

FIG. 4 is a simplified diagram of frequency-domain spectral shaping according to the conventional technology;

FIG. 5 is a diagram of a structure of a communication system according to an embodiment of this application;

FIG. 6 is a flowchart of a communication method according to an embodiment of this application;

FIG. 7 is a flowchart of another communication method according to an embodiment of this application;

FIG. 8 is a flowchart of another communication method according to an embodiment of this application;

FIG. 9 is a diagram of a format in which a second ratio is reported according to an embodiment of this application;

FIG. 10 is a flowchart of another communication method according to an embodiment of this application;

FIG. 11 is a flowchart of another communication method according to an embodiment of this application;

FIG. 12 is a diagram of triggering reporting of a second ratio according to an embodiment of this application;

FIG. 13 is a diagram of composition of a communication apparatus according to an embodiment of this application;

FIG. 14 is a diagram of composition of another communication apparatus according to an embodiment of this application; and

FIG. 15 is a diagram of a hardware structure of a communication apparatus according to an embodiment of this application.

## DESCRIPTION OF EMBODIMENTS

In descriptions of this application, unless otherwise specified, "/" represents an "or" relationship between associated objects. For example, A/B may represent A or B. In this application, "and/or" merely describes an association relationship between associated objects and represents that three relationships may exist. For example, A and/or B may represent three cases: Only A exists, both A and B exist, or only B exists, where A and B may be singular or plural.

In the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, both "when" and "if" mean that corresponding processing is performed in an objective situation, are not intended to limit time, do not require a determining action during implementation, and do not mean any other limitation.

It can be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

To make embodiments of this application clearer, some concepts in this application are first briefly described.

1. Subcarrier

A subcarrier is several sub-resources obtained by dividing a frequency domain resource (or a spectrum resource) in an orthogonal frequency division multiplexing (orthogonal frequency division multiplexing, OFDM) system. The subcarrier may be considered as a frequency domain resource at a minimum granularity.

2. Subcarrier spacing

A subcarrier spacing is a spacing value between center locations or peak locations of any two adjacent subcarriers in a frequency domain resource in an OFDM system.

For example, a subcarrier spacing of a long term evolution (long term evolution, LTE) system is 15 kilohertz (kilohertz, kHz), and a subcarrier spacing of a new radio (new radio, NR) system may be 15 kHz, 30 kHz, 60 kHz, 120 kHz, 240 kHz, or the like.

In an optional implementation, the subcarrier spacing of the NR system may be marked by a network device in a quantization manner. In a possible implementation, the network device marks different subcarrier spacings with different numbers. For example, the network device marks a subcarrier spacing of 15 kHz as 0. For another example, the network device marks a subcarrier spacing of 30 kHz as 1. For another example, the network device marks a subcarrier spacing of 60 kHz as 2. For another example, the network device marks a subcarrier spacing of 120 kHz as 3. For another example, the network device marks a subcarrier spacing of 240 kHz as 4.

3. Resource block

A resource block includes a plurality of consecutive subcarriers. For example, a resource block of an LTE system may include 12 consecutive subcarriers, and a resource block of an NR system may also include 12 consecutive subcarriers. The foregoing descriptions are merely example descriptions of the resource block of the LTE system and the resource block of the NR system. The resource block of the LTE system and the resource block of the NR system in this application may alternatively include another quantity of consecutive subcarriers. For example, the resource block of the LTE system includes 10 consecutive subcarriers, and the resource block of the NR system includes 14 consecutive subcarriers. This is not limited in this application.

4. OFDM symbol

An OFDM symbol is a minimum time unit in an OFDM system.

5. Slot

One slot includes a plurality of OFDM symbols. For example, one slot in an NR system may include 14 OFDM symbols.

Optionally, the slot may correspond to a subcarrier spacing. For example, when the slot is 1 millisecond (ms), a subcarrier spacing corresponding to the slot may be 15 kHz. For another example, when the slot is 0.5 millisecond (ms), a subcarrier spacing corresponding to the slot may be 30 kHz.

6. Subframe

One subframe includes a plurality of slots. For example, if one slot in an NR system is 0.5 ms, and one subframe includes two slots, one subframe in the NR system may be 1 millisecond (ms).

7. Power amplifier (power amplifier, PA)

APA is configured to amplify a power of a signal (for example, a low-power radio frequency signal) generated by a modulation and oscillation circuit, to support transmission of the signal on a radio channel.

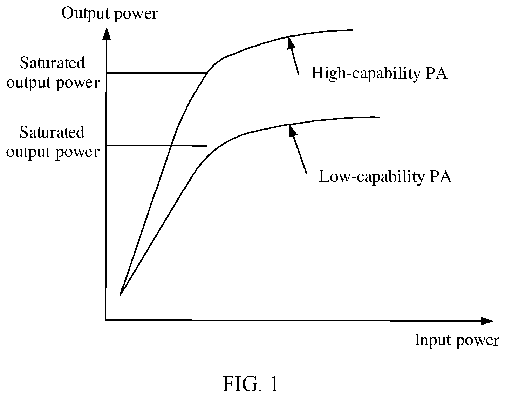

PAs may be classified into a high-capability PA and a low-capability PA. A difference between the high-capability PA and the low-capability PA lies in a power amplifying capability. As shown in FIG. 1, for a same signal, an output power (namely, an amplified power of the signal) obtained by amplifying an input power (namely, an original power of the signal) of the signal by the high-capability PA is higher than an output power obtained by amplifying the input power of the signal by the low-capability PA. In view of this, the low-capability PA is not applicable to a high-power signal transmission scenario, and the high-capability PA is applicable to the high-power signal transmission scenario. PAs with different capabilities correspond to different saturated output powers. A saturated output power of the high-capability PA is higher than a saturated output power of the low-capability PA.

Optionally, with reference to FIG. 1, it can be learned that when the output power of the signal is higher than the saturated output power, there is no linear relationship between the input power of the signal and the output power of the signal. Therefore, the PA cannot amplify the input power of the signal without limitation, and needs to control the output power of the signal, so that the output power is lower than or equal to the saturated output power. In addition, if the output power of the signal is higher than the saturated output power, a spectrum of the signal is greatly extended, and an abnormal change in the signal is caused. In this case, large interference is caused to another signal, and performance of a communication system is affected.

8. Coverage capability of a communication link

A coverage capability of a communication link refers to a maximum range in which a receiver can normally receive a signal (which may alternatively be an electromagnetic wave) after a transmitter sends the signal.

In a possible implementation, as a distance between the transmitter and the receiver increases, a power of a signal transmitted through the communication link also decreases. Therefore, the coverage capability of the communication link may be represented by a maximum attenuation power, and the maximum attenuation power is a difference between a transmit power of the signal and a receive power of the signal when the transmitter and the receiver are at a preset distance. The preset distance is a maximum distance between the receiver and the transmitter on the premise that the receiver can normally receive the signal (or a transmission rate of the signal is higher than or equal to a minimum transmission rate).

Generally, if a transmit power of a signal is large, a maximum attenuation power of the signal is also large. In view of this, the maximum attenuation power of the signal may be increased by increasing the transmit power of the signal, thereby improving the coverage capability of the communication link.

9. PAPR

A PAPR is a ratio of a peak power of a signal to an average power of the signal. A lower PAPR represents a smaller difference between a peak power of a transmitted signal and an average power of the transmitted signal. Generally, the peak power of the signal is controlled within a specific range. In this way, a lower PAPR represents a higher average power of the signal. A higher average power of the transmitted signal indicates a higher transmit power of the signal, and it may be further determined that a coverage capability of a communication link for transmitting the signal is stronger.

Optionally, when the PAPR is excessively high, the average power of the signal (namely, an output power of the signal) is likely to be higher than a saturated output power. Consequently, there is no linear relationship between an input power of the signal and the average power of the signal. In addition, if the average power of the signal is excessively high, the signal causes strong interference to another signal. To make the average power of the signal lower than or equal to the saturated output power, the average power of the signal needs to be reduced, and the reduction of the average power of the signal causes a decrease in the coverage capability of the communication link for transmitting the signal. It can be learned that a higher PAPR of a signal causes a lower coverage capability of a communication link for transmitting the signal, and a lower PAPR of a signal causes a higher coverage capability of a communication link for transmitting the signal.

11. Cubic metric (cubic metric, CM)

A CM represents power efficiency reduced by a PA. Because the CM can accurately measure interference (for example, in-band interference or adjacent-channel interference) caused by threeorder nonlinear components in a power gain characteristic, the CM is more accurate than the PAPR, and can better reflect a power amplification characteristic of an OFDM signal.

12. A procedure of converting, by using a DFT-S-OFDM technology, a data bit of a terminal device into an analog signal to be sent to an access network device is as follows:

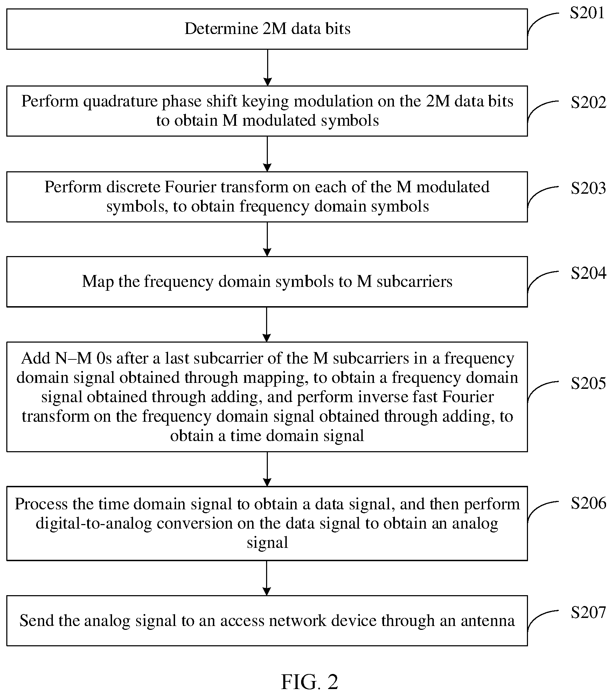

As shown in FIG. 2, the foregoing procedure may be implemented by using the following S201 to S207.

S201: The terminal device determines 2M data bits.

In a possible implementation, the 2M data bits may be represented in the following form: {b(0), b(1), ..., b(2M-1)}. b() represents a data bit, and M is a positive integer.

S202: The terminal device performs quadrature phase shift keying (quadrature phase shift keying, QPSK) modulation on the 2M data bits to obtain M modulated symbols.

In a possible implementation, the M modulated symbols may be represented in the following form: {s(0), s(1), ..., s(M-1)}. s() represents a modulated symbol.

QPSK is a modulation mode in which a data bit is converted into a modulated signal. One QPSK modulated symbol may carry two data bits. QPSK modulated symbols may be classified into four types, and QPSK modulated symbols of different types may be represented by using different phases. In an example, four phases of QPSK may be {0, $\pi/2$, $\pi$, $3\pi/2$}. In another example, four phases of QPSK may be {$\pi/4$, $3\pi/4$, $5\pi/4$, $7\pi/4$}. When the four phases of QPSK are {$\pi/4$, $3\pi/4$, $5\pi/4$, $7\pi/4$}, the QPSK modulated symbol may satisfy the following formula 1:

$$c\_k = 1/\sqrt{2}(a\_k + j*b\_k) \qquad\qquad \text{Formula 1}$$

c_k is the QPSK modulated symbol. a_k is a mapping of one data bit. b_k is a mapping of another data bit. A mapping relationship is as follows: 0 is mapped to -1, and 1 is mapped to 1.

S203: The terminal device performs discrete Fourier transform (Discrete Fourier Transform, DFT) on each of the M modulated symbols, to obtain M frequency domain symbols.

S204: The terminal device maps the M frequency domain symbols to M subcarriers.

In a possible implementation, M mapped frequency domain symbols may be represented in the following form: {X(0), X(1), ..., X(M-1)}. X() represents a frequency domain symbol carried by one subcarrier in the frequency domain signal.

Optionally, in a multi-antenna scenario, the terminal device may multiply the M frequency domain symbols by a precoding matrix, to obtain processed frequency domain symbols. After obtaining the processed frequency domain symbols, the terminal device maps the processed frequency domain symbols to the M subcarriers.

S205: The terminal device adds N-M 0s after a last subcarrier of the M subcarriers in a frequency domain signal obtained through mapping, to obtain a transformed frequency domain signal, and performs inverse fast Fourier transform (Inverse Fast Fourier Transform, IFFT) on the transformed frequency domain signal, to obtain a time domain signal.

In a possible implementation, the time domain signal may be represented in the following form: {Z(0), Z(1), ..., Z(N-1)}. Z() represents a sampling symbol. N is a positive integer greater than M, and N is determined based on a system bandwidth of a communication system.

S206: The terminal device processes the time domain signal to obtain a data signal, and performs digital-to-analog conversion on the data signal to obtain an analog signal.

In a possible implementation, an implementation process in which the terminal device processes the time domain signal to obtain the data signal may be as follows: A cyclic prefix (cyclic prefix, CP) is added to the time domain signal to obtain the data signal.

S207: The terminal device sends the analog signal to the access network device through an antenna. Correspondingly, the access network device receives the analog signal from the terminal device.

13. Spectral extension

Spectral extension refers to cyclic extension of subcarriers in a frequency domain signal.

In a possible implementation, for example, a frequency domain signal #1 (for example, {X(0), X(1), ..., X(L-1)}) includes L subcarriers, and E subcarriers need to be extended. A terminal device may classify the E subcarriers into two parts. One part includes P subcarriers, and the other part includes E-P subcarriers. The terminal device may place the P subcarriers before a 1$^{st}$ subcarrier in a to-be-extended frequency domain signal, place the E-P subcarriers after a last subcarrier in the to-be-extended frequency domain signal, and finally obtain an extended frequency domain signal (for example, {X(L-P), X(M-P+1), ..., X(M-1), X(0), X(1), ..., X(M-1), X(0), X(1), ..., X(E-P-1)}). The extended frequency domain signal may include M+P subcarriers. L, E, and P are all positive integers.

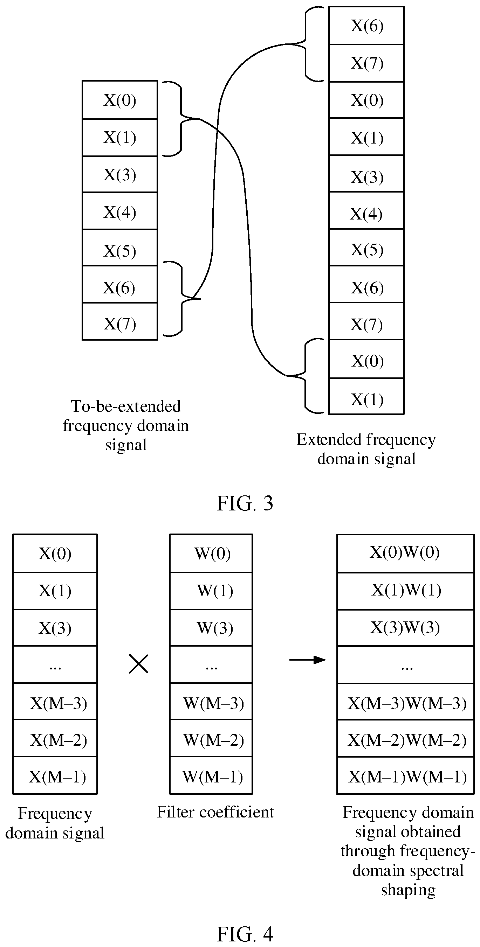

For example, as shown in FIG. 3, when L is 8, E is 4, and P is 2, the terminal device may place two subcarriers before the 1$^{st}$ subcarrier of the to-be-extended frequency domain signal, and place two subcarriers after the last subcarrier of the to-be-extended frequency domain signal. If the to-be-extended frequency domain signal is {X(0), X(1), X(2), X(3), X(4), X(5), X(6), X(7)}, it may be learned that an arrangement sequence of subcarriers is from 0 to 7. Because the spectral extension is the cyclic extension, when the 1$^{st}$ subcarrier is X(0), it may be learned that two subcarriers X(6) and X(7) are placed before the 1$^{st}$ subcarrier of the to-be-extended frequency domain signal. Correspondingly, when the last subcarrier is X(7), it may be learned that two subcarriers X(0) and X(1) are placed after the last subcarrier of the to-be-extended frequency domain signal. In this way, the extended frequency domain signal is {X(6), X(7), X(0), X(1), X(2), X(3), X(4), X(5), X(6), X(7), X(0), X(1)}.

14. FDSS

FDSS refers to filter processing on each subcarrier in a frequency domain signal. In a possible implementation, a terminal device multiplies each subcarrier in the frequency domain signal by a filter coefficient corresponding to the subcarrier.

In an optional implementation, as shown in FIG. 4, the frequency domain signal is {X(0), X(1), ..., X(M-1)}, and filter coefficients corresponding to M subcarriers in the frequency domain signal are {W(0), W(1), ..., W(M-1)}. Each subcarrier X in the frequency domain signal corresponds to one filter coefficient subcarrier W. For example, a filter coefficient corresponding to X(0) is W(0). In this way, the terminal device may multiply X(0) by W(0), to obtain X(0)W(0). Based on the foregoing operation, the terminal device may multiply each of the M subcarriers by a filter coefficient corresponding to the subcarrier, to obtain a frequency domain signal obtained through FDSS processing (which may also be referred to as a frequency domain signal obtained through filter processing).

The foregoing briefly describes some concepts in embodiments of this application.

The technical solutions provided in embodiments of this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE-NR hybrid networking system, or a device-to-device (device-to-device, D2D) system, a machine-to-machine (machine-to-machine, M2M) communication system, the Internet of things (Internet of Things, IoT), or another next-generation communication system. Alternatively, the communication system may be a non-3GPP communication system. This is not limited.

The foregoing communication systems applicable to this application are merely examples for description, and communication systems applicable to this application are not limited thereto. This is uniformly described herein, and details are not described below again.

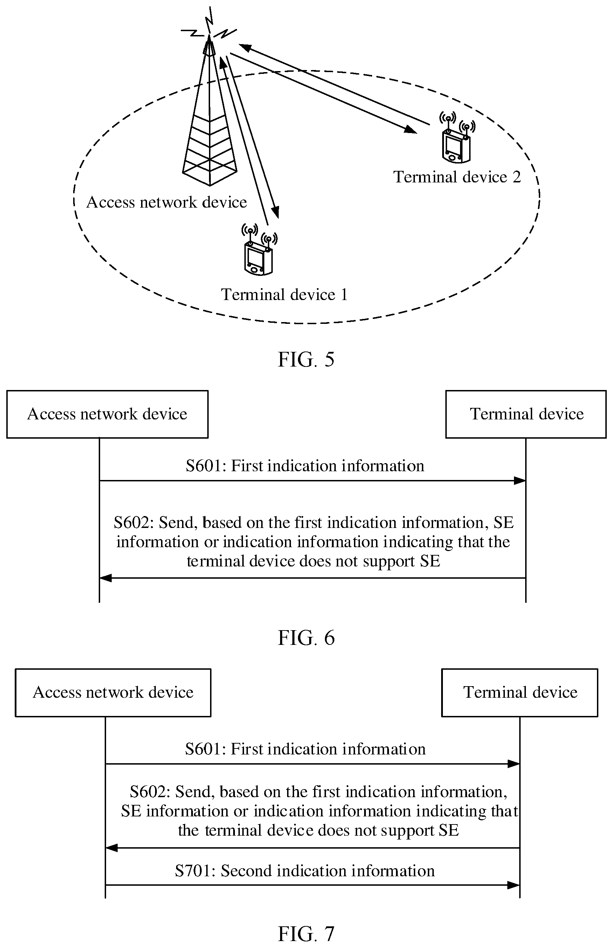

FIG. 5 is a diagram of an architecture of a communication system to which an embodiment of this application is applied. As shown in FIG. 5, the communication system includes an access network device and at least one terminal device (for example, a terminal device 1 and a terminal device 2 in FIG. 5).

The terminal device 1 and the terminal device 2 may send an uplink signal to the access network device in a wireless manner. Correspondingly, the access network device may receive the uplink signal from the terminal device 1 and the terminal device 2 in a wireless manner.

The access network device may send a downlink signal to the terminal device 1 and the terminal device 2 in a wireless manner. Correspondingly, the terminal device 1 and the terminal device 2 may receive the downlink signal from the access network device in a wireless manner.

In a possible implementation, the access network device is further configured to send a downlink control information (downlink control information, DCI) message to the terminal device 1 or the terminal device 2.

Optionally, the access network device is a device that connects a terminal device to a wireless network, and may be an evolved NodeB (evolved NodeB, eNB or eNodeB) in an LTE or an LTE-advanced (LTE-Advanced, LTE-A) system, for example, a conventional macro base station eNB and a micro base station eNB in a heterogeneous network scenario;

or may be a next generation NodeB (next generation NodeB, gNodeB or gNB) in a 5G system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a wireless controller in a cloud radio access network (cloud radio access network, CRAN); or may be an access point (access point, AP) in a Wi-Fi system; or may be a wireless relay node or a wireless backhaul node; or may be a device for implementing a base station function in the IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), a relay station, and an access point. This is not specifically limited in embodiments of this application.

Optionally, the terminal device may be a user-side device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in IoT, V2X, D2D, M2M, a 5G network, or a future evolved PLMN. The terminal device may be deployed on land, including an indoor or outdoor terminal device, and a handheld or vehicle-mounted terminal device; may be deployed on water (for example, on a ship); or may be deployed in the air (for example, on an airplane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a computing device or another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

It may be understood that, in addition to the devices shown in FIG. 5, the communication system provided in this embodiment of this application may further include another device, for example, a core network device.

In a possible implementation, the core network device and the access network device may be different independent physical devices, or a function of the core network device and a logical function of the access network device may be integrated into a same physical device, or a part of functions of the core network device and a part of functions of the radio access network device may be integrated into one physical device. Quantities of core network devices, access network devices, and terminal devices included in the communication system are not limited in embodiments of this application.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

Currently, a frequency domain signal is adjusted by using an SE technology, so that a PAPR of a signal transmitted between a terminal device and an access network device can be reduced, thereby improving a network coverage capability. However, because configurations of different terminal devices are different, different terminal devices support different technologies. For example, the terminal device #1 supports SE. For another example, the terminal device #2 does not support SE, but supports FDSS.

In a communication system, currently, an access network device cannot learn whether a terminal device supports SE. When the access network device cannot learn whether the terminal device supports the SE, the access network device cannot extend a frequency domain signal of the terminal device. As a result, the frequency domain signal cannot be adjusted by using the SE technology.

To resolve this problem, an embodiment of this application provides a communication method. Refer to FIG. 6. The communication method includes the following steps.

S601: An access network device sends first indication information to a terminal device. Correspondingly, the terminal device receives the first indication information from the access network device.

The first indication information indicates the terminal device to send SE information. The SE information is used to demodulate a first frequency domain signal. The first frequency domain signal is a frequency domain signal obtained by performing discrete Fourier transform on data transmitted between the terminal device and the access network device.

In a possible implementation, the first indication information may be carried in a user equipment capability enquiry (UE capability enquiry) message sent by the access network device to the terminal device.

Optionally, the SE information may indicate different information. For example, the SE information indicates a first ratio, or the SE information indicates a first ratio and a symbol location, or the SE information indicates type information. The following separately describes the foregoing three different types of SE information.

Implementation 1: The SE information indicates the first ratio.

The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition.

Optionally, the first ratio may alternatively be a ratio of the quantity of first spectrum resources to a sum of the quantity of spectrum resources occupied by the first frequency domain signal and the quantity of first spectrum resources.

In some examples, the spectrum resource may be a resource block (resource block, RB) or a resource element (resource element, RE).

In an optional implementation, the first ratio may satisfy the following formula 2:

$$SE=length(SE)/length(Data)=(length(SE\_right)+length(SE\_left))/length(Data) \qquad \text{Formula 2}$$

SE is the first ratio. length(SE) is the quantity of the first spectrum resources. length(SE) may include a quantity of spectrum resources extended before a $1^{st}$ subcarrier of the first frequency domain signal and a quantity of spectrum resources extended after a last subcarrier of the first frequency domain signal. length(SE_right) is the quantity of spectrum resources extended before the $1^{st}$ subcarrier of the first frequency domain signal. length(SE_left) is the quantity of spectrum resources extended after the last subcarrier of the first frequency domain signal. length(Data) is the quantity of spectrum resources occupied by the first frequency domain signal.

In a possible implementation, the first indicator condition is that the coverage indicator is between a first indicator and a second indicator. The first indicator is a coverage indicator of the terminal device when a coverage capability of the terminal device is the strongest, and the second indicator is a coverage indicator of the terminal device when the coverage capability of the terminal device is a preset coverage capability.

In an example, the coverage indicator may include at least one of the following: a PARP, a CM, spectral efficiency, and the like. The foregoing description is merely an example description of the coverage indicator. The coverage indicator in this application may further include another indicator (for example, a reference signal received power (reference signal received power, RSRP)). This is not limited in this application.

Optionally, the preset coverage capability may be a preset value determined by the access network device based on a lowest rate of signal transmission. Different types of coverage indicators correspond to different preset capabilities. For example, if the coverage indicator is the PAPR, the preset capability is 20. For another example, if the second indicator is the RSRP, the preset capability is -85 dBm (dBm).

In this implementation, the first ratio may include one or more values.

When the first ratio includes one value, the value may be the ratio of the quantity of first spectrum resources to the quantity of spectrum resources occupied by the first frequency domain signal. The quantity of first spectrum resources may be a quantity of spectrum resources to be extended for the first frequency domain signal when the coverage indicator of the terminal device at the first moment is any indicator between the first indicator and the second indicator.

When the first ratio includes a plurality of values, the plurality of values may be ratios of multiple quantities of first spectrum resources to the quantity of spectrum resources occupied by the first frequency domain signal. The multiple quantities of first spectrum resources may be quantities of spectrum resources to be extended for the first frequency domain signal when the coverage indicator of the terminal device at the first moment is any multiple indicators between the first indicator and the second indicator.

Optionally, the any multiple indicators between the first indicator and the second indicator may be consecutive or discrete. This is not limited in this application.

In another possible implementation, the first indicator condition is that the coverage indicator is a first indicator and/or a second indicator. In this implementation, if the first indicator condition includes one indicator (for example, the first indicator or the second indicator), the first ratio includes one first ratio; or if the first indicator condition includes a plurality of indicators (for example, the first indicator and the second indicator), the first ratio includes a plurality of first ratios.

Implementation 2: The SE information indicates the first ratio and the symbol location.

Optionally, there may be a plurality of implementations for the symbol location. The following separately describes different implementations for the symbol location.

In a possible implementation, the symbol location is a ratio of a quantity of spectrum resources to be extended before a 1st subcarrier of the first frequency domain signal or after a last subcarrier of the first frequency domain signal at a first moment to a quantity of spectrum resources occupied by the first frequency domain signal.

For example, the symbol location may satisfy the following formula 3:

$$SE\_1=(length(SE\_right/left))/length(Data) \qquad \text{Formula 3}$$

SE_1 is the symbol location. length(SE_right/left) is a quantity of spectrum resources extended before the 1st subcarrier of the first frequency domain signal, or length(SE_right/left) is a quantity of spectrum resources extended after the last subcarrier of the first frequency domain signal.

For example, the first moment may be a moment at which the terminal device receives the first indication information.

In another possible implementation, the symbol location represents a location of a subcarrier occupied by any symbol in the first frequency domain signal.

Example 1: For example, the symbol location represents a location of a subcarrier occupied by a 1st symbol in the first frequency domain signal, and the symbol location may be a location #1.

Example 2: For example, the symbol location represents a location of a subcarrier occupied by a last symbol in the first frequency domain signal, and the symbol location may be a location #8.

In still another possible implementation, the symbol location represents a symbol identifier on any subcarrier in the first frequency domain signal.

Example 3: For example, the symbol location represents a symbol identifier on a 1st subcarrier in the first frequency domain signal, and the symbol location may be a symbol identifier #9.

Example 4: For example, the symbol location represents a symbol identifier on a last subcarrier in the first frequency domain signal, and the symbol location may be a symbol identifier #2.

In an optional implementation, the SE information further indicates the symbol location. This is not specifically limited in embodiments of this application.

Implementation 3: The SE information indicates the type information.

The type information represents a type of an FDSS filter of the terminal device.

In a possible implementation, a type of one FDSS filter may correspond to one or more first ratios and one or more symbol locations. For related descriptions of the first ratio and the symbol location, refer to the descriptions in the foregoing embodiment. Details are not described herein again.

Further, in another possible implementation, the type of the one FDSS filter may further correspond to one or more third ratios (that is, a type of one FDSS filter may correspond to one or more first ratios, one or more symbol locations, and one or more third ratios). The third ratio is a ratio of a first parameter to a sum of the first parameter and a second parameter. The first parameter is a sum of squares of FDSS filter coefficients corresponding to one or more first spectrum resources. The second parameter is a sum of squares of FDSS filter coefficients corresponding to one or more second spectrum resources. The first spectrum resource is a spectrum resource to be extended for the first frequency domain signal when a coverage indicator of the terminal device at a first moment meets a first indicator condition. The second spectrum resource is a spectrum resource in the first frequency domain signal.

Optionally, the third ratio may satisfy the following formula 4:

$$\alpha = \frac{\sum_{n\in\{M_R^{left}\}}\left|fdss(n)\right|^2 + \sum_{m\in\{M_R^{right}\}}\left|fdss(m)\right|^2}{\sum_{k\in\{M_R^{left}\}\bigcup\{M_R^{right}\}\bigcup\{M_R^{middle}\}}\left|fdss(k)\right|^2} \qquad \text{Formula 4}$$

$\alpha$ is the third ratio. fdss is an FDSS filter coefficient corresponding to one spectrum resource (the spectrum resource may be the first spectrum resource or the second spectrum resource). The first spectrum resource may be any spectrum resource in $\{M_R^{left}\}$ and $\{M_R^{right}\}$. $\{M_R^{left}\}$ is a set of spectrum resources extended before a 1st subcarrier of the first frequency domain signal. $\{M_R^{right}\}$ is a set of spectrum resources extended after a last subcarrier of the first frequency domain signal. The second spectrum resource may be any spectrum resource in $\{M_R^{middle}\}$. $\{M_R^{middle}\}$ is

a set of spectrum resources occupied by the first frequency domain signal. n, m, and k are all positive integers.

It may be understood that the access network device may learn, based on the third ratio, a difference between a power of data carried on the first spectrum resource and a power of data carried on the second spectrum resource, and then better control a power of an extended first frequency domain signal based on the difference between the power of the data carried on the first spectrum resource and the power of the data carried on the second spectrum resource.

The access network device may further determine, based on the third ratio, a demodulation mode for the first frequency domain signal, so that the access network device can better demodulate the first frequency domain signal. For example, when the third ratio is large, the access network device may demodulate the first frequency domain signal in a maximum ratio combining (maximum ratio combining, MRC) mode. For another example, when the third ratio is small, the access network device may demodulate the first frequency domain signal in a manner of discarding a spectrum resource. For example, the access network device discards a to-be-extended spectrum resource of the first frequency domain signal, and does not demodulate data on the to-be-extended spectrum resource of the first frequency domain signal.

In another possible implementation, a type of one FDSS filter may further correspond to one or more first ratios.

In an optional implementation, the type information may include a type of one or more FDSS filters of the terminal device. A quantity of types of FDSS filters of the terminal device is not limited in this application.

Optionally, the foregoing implementation 1 to implementation 3 are merely three example descriptions of the SE information, and the SE information may further indicate the first ratio, the symbol location, and the type information. Certainly, the SE information may further indicate other information, for example, cyclic shift information, a replication location, or information indicating that the terminal device supports SE. This is not limited in embodiments of this application.

For example, when the SE information indicates the first ratio, the symbol location, and the type information, an example of the SE information is as follows:

```
se-parameters{
      Capability-SE
       Optimal-SE
        Mode-SE
}
```

SE-parameters (se-parameters) represent the SE information. Capability-SE (Capability-SE) represents the type information. Optimal-SE (Optimal-SE) represents the ratio (namely, one of the first ratios) of the quantity of spectrum resources to be extended for the first frequency domain signal to the quantity of spectrum resources occupied by the first frequency domain signal when the coverage indicator of the terminal device at the first moment is the first indicator. Mode-SE (Mode-SE) represents the symbol location. In this case, the information in the SE-parameters may not change with a channel state.

S602: The terminal device sends, based on the first indication information, the SE information or indication information indicating that the terminal device does not support SE to the access network device. Correspondingly, the access network device receives the indication information indicating that the terminal device does not support the SE from the terminal device, or receives the SE information from the terminal device.

In a possible implementation, the SE information and the indication information indicating that the terminal device does not support the SE may be carried in an SE-parameters (se-parameters) field in user equipment capability information (UE capability information).

In a possible implementation, S602 includes: The terminal device determines, in response to the first indication information, whether the terminal device supports the SE. If the terminal device determines that the terminal device supports the SE, the terminal device may send the SE information to the access network device. If the terminal device determines that the terminal device does not support the SE, the terminal device may send the indication information indicating that the terminal device does not support the SE to the access network device.

Optionally, after receiving the SE information from the terminal device, the access network device may demodulate the first frequency domain signal based on the SE information. It can be learned from the foregoing descriptions that the SE information may indicate different information. Therefore, an implementation in which the access network device demodulates the first frequency domain signal based on the SE information may be described with reference to the implementations 1 to 3 in step S601.

In the foregoing implementation 1, the access network device may demodulate the first frequency domain signal based on the first ratio and a preconfigured symbol location.

In a possible implementation, the preconfigured symbol location is a symbol location configured by the access network device for the first frequency domain signal.

In the foregoing implementation 2, the access network device demodulates the first frequency domain signal based on the first ratio and the symbol location.

In this implementation, the symbol location is a symbol location (namely, a symbol location of the terminal device) indicated by the SE information.

In the foregoing implementation 3, the access network device may determine a target first ratio and a target symbol location from the one or more first ratios and the one or more symbol locations corresponding to the type of the FDSS filter, and demodulate the first frequency domain signal based on the target first ratio and the target symbol location.

In the foregoing implementation, the access network device may determine the target first ratio, the target symbol location, and a target third ratio from the one or more first ratios, the one or more symbol locations, and the one or more third ratios corresponding to the type of the FDSS filter, and demodulate the first frequency domain signal based on the target first ratio, the target symbol location, and the target third ratio.

In an optional implementation, there is a correspondence between the one or more first ratios and the one or more symbol locations. One first ratio may correspond to one or more symbol locations. In this implementation, the access network device may determine, from the one or more first ratios, any first ratio as the target first ratio, and determine, from one or more symbol locations corresponding to the target first ratio, any symbol location as the target symbol location.

Optionally, if implementations of the symbol location are different, implementation processes in which the access network device demodulates the first frequency domain signal based on the first ratio and the symbol location (or the preconfigured symbol location) are different. The following separately describes implementation processes in which the access network device demodulates the first frequency domain signal based on the first ratio and symbol locations in different implementations.

**In** a possible implementation, an implementation process in which the access network device demodulates the first frequency domain signal based on the first ratio and the symbol location when the symbol location is the ratio of the quantity of spectrum resources to be extended before the 1st subcarrier of the first frequency domain signal at the first moment to the quantity of spectrum resources occupied by the first frequency domain signal is as follows:

First, the access network device first determines the quantity of first spectrum resources based on the first ratio and the quantity of spectrum resources occupied by the first frequency domain signal, and then determines, based on the symbol location and the quantity of spectrum resources occupied by the first frequency domain signal, the quantity of spectrum resources (denoted as a quantity of third spectrum resources) to be extended before the 1st subcarrier of the first frequency domain signal at the first moment. The access network device determines, based on the quantity of first spectrum resources and the quantity of third spectrum resources, the quantity of spectrum resources (denoted as a quantity of fourth spectrum resources) to be extended after the last subcarrier of the first frequency domain signal at the first moment. After the access network device obtains the quantity of third spectrum resources and the quantity of fourth spectrum resources, the access device may determine a location of the third spectrum resource and a location of the fourth spectrum resource.

Then, the access network device may determine, based on the location of the third spectrum resource and the location of the fourth spectrum resource in an extended first frequency domain signal, a location of the spectrum resource occupied by the first frequency domain signal, and obtain a symbol on the spectrum resource occupied by the first frequency domain signal. The access network device performs cyclic shift on the symbol on the spectrum resource occupied by the first frequency domain signal to obtain a first frequency domain signal.

For example, an example in which the quantity of third spectrum resources is 2, the quantity of fourth spectrum resources is also 2, and a quantity of symbols of the extended first frequency domain signal is 10 is used for description. The third spectrum resources are resources located before the 1st subcarrier of the first frequency domain signal, and the fourth spectrum resources are resources located after the last subcarrier of the first frequency domain signal. Therefore, the access network device may determine symbols (for example, $\{Y(7), Y(0), Y(1), Y(2), Y(3), Y(4), Y(5), Y(6)\}$) carried by a third subcarrier to an eighth subcarrier of the extended first frequency domain signal, and perform cyclic shift on the symbols carried by the third subcarrier to the eighth subcarrier to obtain a first frequency domain signal ($\{Y(0), Y(1), Y(2), Y(3), Y(4), Y(5), Y(6), Y(7)\}$).

Optionally, if the access network device demodulates the first frequency domain signal based on the target first ratio, the target symbol location, and a target third location, an implementation process in which the access network device obtains the symbol on the spectrum resource occupied by the first frequency domain signal is as follows: The access network device may determine, based on the target third ratio, a demodulation mode for demodulating the first frequency domain signal, and demodulate the first frequency domain signal based on an adaptive demodulation mode, to obtain the symbol on the spectrum resource occupied by the first frequency domain signal.

Finally, the access network device obtains a data bit of the terminal device from the first frequency domain signal. For an implementation in which the access network device obtains the data bit of the terminal device from the first frequency domain signal, refer to the conventional technology. Details are not described herein.

Optionally, the access network device may further add a power of a first symbol on the third spectrum resource and/or a power of a first symbol on the fourth spectrum resource to a power of a first symbol in the first frequency domain signal. For example, if the first symbol on the third spectrum resource is $Y(0)$, the access network device may add the power of the first symbol on the third spectrum resource to the power of the first symbol $Y(0)$ in the first spectrum signal.

**In** another possible implementation, when the symbol location is the ratio of the quantity of spectrum resources to be extended after the last subcarrier of the first frequency domain signal at the first moment to the quantity of spectrum resources occupied by the first frequency domain signal, for an implementation process of the access network device based on the first ratio and the symbol location, refer to the foregoing implementation (namely, the implementation process in which the access network device demodulates the first frequency domain signal based on the first ratio and the symbol location when the symbol location is the ratio of the quantity of spectrum resources to be extended before the 1st subcarrier of the first frequency domain signal at the first moment to the quantity of spectrum resources occupied by the first frequency domain signal). Details are not described herein again.

In another possible implementation, an implementation process in which the access network device demodulates the first frequency domain signal based on the first ratio and the symbol location when the symbol location represents the location of the subcarrier occupied by the any symbol that is in the first frequency domain signal and that is preconfigured for the first frequency domain signal is as follows:

First, the access network device first determines the quantity of first spectrum resources based on the first ratio and the quantity of spectrum resources occupied by the first frequency domain signal, and then determines, based on the quantity of first spectrum resources and the quantity of spectrum resources occupied by the first frequency domain signal, a quantity of spectrum resources occupied by an extended first frequency domain signal.

Then, the access network device determines, based on the location of the subcarrier occupied by the any symbol in the first frequency domain signal, symbols carried by all subcarriers in the extended first frequency domain signal, and determines symbols of the first frequency domain signal from the symbols. The access network device determines the first frequency domain signal based on the symbols of the first frequency domain signal and a preset order.

For example, an example in which a quantity of symbols of the first frequency domain signal is 8, and a quantity of symbols of the extended first frequency domain signal is 10 is used for description. If the symbol location indicates that a 1st symbol (for example, Y(0)) in the first frequency domain signal occupies a second subcarrier, the symbols carried by all the subcarriers in the extended first frequency domain signal are {Y(7), Y(0), Y(1), Y(2), Y(3), Y(4), Y(5), Y(6), Y(7), Y(0)}. The access network device determines Y(0) to Y(7) from {Y(7), Y(0), Y(1), Y(2), Y(3), Y(4), Y(5), Y(6), Y(7), Y(0)}, and determines, based on Y(0) to Y(7) and a preset order, that the first frequency domain signal is {Y(0), Y(1), Y(2), Y(3), Y(4), Y(5), Y(6), Y(7)}.

Finally, the access network device obtains a data bit of the terminal device from the first frequency domain signal. That the access network device obtains the data bit of the terminal device from the first frequency domain signal is the conventional technology. For understanding, refer to the conventional technology. Details are not described herein.

Optionally, for both an implementation process in which the access network device demodulates the first frequency domain signal based on the target first ratio and the target symbol location, and an implementation process in which the access network device demodulates the first frequency domain signal based on the target first ratio, the target symbol location, and the target third ratio, refer to the implementation process in which the access network device demodulates the first frequency domain signal based on the first ratio and the symbol location. Details are not described herein again.

According to the communication method provided in this embodiment of this application, the access network device may send the first indication information to the terminal device, where the first indication information indicates the terminal device to send the SE information. In response to the first indication information, the terminal device determines whether the terminal device supports the SE. If the terminal device sends the indication information indicating that the terminal device does not support the SE to the access network device, the access network device may determine that spectral extension cannot be performed on the first frequency domain signal of the terminal device. If the terminal device sends the SE information to the access network device, the access network device may determine that spectral extension can be performed on the first frequency domain signal of the terminal device. The first indication information indicates the terminal device to send the SE information. The SE information is used to demodulate the first frequency domain signal. The first frequency domain signal is the frequency domain signal obtained by performing discrete Fourier transform on the data transmitted between the terminal device and the access network device. Because the access network device may learn of information about whether a terminal device supports SE, the access network device can indicate a terminal device that supports SE to perform spectral extension on the first frequency domain signal based on the SE information, that is, may adjust the first frequency domain signal by using an SE technology. In addition, the access network device may further demodulate the first frequency domain signal based on the SE information.

In an optional embodiment, if the terminal device sends the SE information to the access network device, it indicates that the terminal device can support the SE. The quantity of second spectrum resources (namely, the quantity of spectrum resources to be extended for the first frequency domain signal when the coverage indicator of the terminal device meets the first indicator condition) may change with a channel state, a modulation and coding scheme (modulation and coding scheme, MCS), or FDSS information (for example, a filter type or a filter coefficient) of the terminal device. Therefore, when the terminal device supports the SE, the terminal device dynamically reports second ratios (namely, ratios of the quantity of second spectrum resources to the quantity of spectrum resources occupied by the first frequency domain signal) at different moments to the access network device, so that the access network device can demodulate the first frequency domain signal based on a latest second ratio. In this way, the access network device can demodulate the first frequency domain signal more accurately, and then obtain accurate data sent by the terminal device.

In this embodiment, if the access network device needs to obtain the second ratios at different moments, the access network device needs to first trigger the terminal device to dynamically report a second ratio. With reference to FIG. 6, as shown in FIG. 7, a possible implementation process in which the access network device indicates the terminal device to dynamically report a second ratio may be implemented by using the following step S701.

S701: The access network device sends second indication information to the terminal device. Correspondingly, the terminal device receives the second indication information from the access network device.

The second indication information indicates the terminal device to dynamically report a second ratio. The second ratio is a ratio of a quantity of second spectrum resources to the quantity of spectrum resources occupied by the first frequency domain signal. The quantity of second spectrum resources is a quantity of spectrum resources to be extended for the first frequency domain signal when the coverage indicator of the terminal device meets the first indicator condition.

In some optional implementations, the first indicator condition may change with a scenario. For example, in a static reporting scenario, the first indicator condition may be that the coverage indicator is the first indicator and the second indicator. In a dynamic reporting scenario, the first indicator condition may be that the coverage indicator is the first indicator, the second indicator, and a third indicator (for example, the third indicator is any indicator between the first indicator and the second indicator). The first indicator is a coverage indicator of the terminal device when the coverage capability of the terminal device is the strongest, and the second indicator is a coverage indicator of the terminal device when the coverage capability of the terminal device is the preset coverage capability. Certainly, the first indicator condition may alternatively not change with a scenario. For example, in a static reporting scenario and a dynamic reporting scenario, the first indicator condition may be that the coverage indicator is one or more of the first indicator, the second indicator, and the third indicator.

In a possible implementation, the second indication information may alternatively indicate the terminal device not to dynamically report a second ratio. In this implementation, the access network device may set the second indication information to different values, to represent that the terminal device is indicated to dynamically report the second ratio, or that the terminal device is indicated not to dynamically report the second ratio.

For example, if the access network device sets the second indication information to 0, the second indication information indicates the terminal device not to dynamically report the second ratio. If the access network device sets the second indication information to 1, the second indication information indicates the terminal device to dynamically report the second ratio.

It may be understood that the access network device indicates, through the second indication information, the terminal device whether to dynamically report the second ratio, so that utilization of an uplink resource can be effectively controlled, and resource utilization of the uplink resource in a communication system is improved.

In an optional implementation, the second indication information may be carried in a DCI message. For example, the second indication information is an SE-active (se-Active) dynamic indication in the DCI message.

Optionally, after receiving the second indication information indicating the terminal device to dynamically report the second ratio, the terminal device may report the second ratio to the access network device. The second ratio is a second ratio at a current moment.

It may be understood that FIG. 7 provides a method in which the access network device indicates the terminal device to dynamically report the second ratio. After the access network device indicates the terminal device to dynamically report the second ratio, the terminal device may dynamically report the second ratio. This embodiment of this application provides examples of three methods in which the terminal device dynamically reports the second ratio after the terminal device receives the second indication information from the access network device. The three methods are respectively as follows: Method 1: The terminal device dynamically reports the second ratio based on a periodicity trigger condition. Method 2: The terminal device dynamically reports the second ratio based on an event trigger condition. Method 3: The terminal device dynamically reports the second ratio based on a periodicity trigger condition and an event trigger condition.

To make this embodiment of this application clearer, the following uses Embodiment 1, Embodiment 2, and Embodiment 3 as examples to describe an implementation method in which the terminal device dynamically reports the second ratio. Embodiment 1 is an example description of an implementation process in which the terminal device dynamically reports the second ratio based on a periodicity trigger condition. Embodiment 2 is an example description of an implementation process in which the terminal device dynamically reports the second ratio based on an event trigger condition. Embodiment 3 is an example description of an implementation process in which the terminal device dynamically reports the second ratio based on a periodicity trigger condition and an event trigger condition.

Embodiment 1

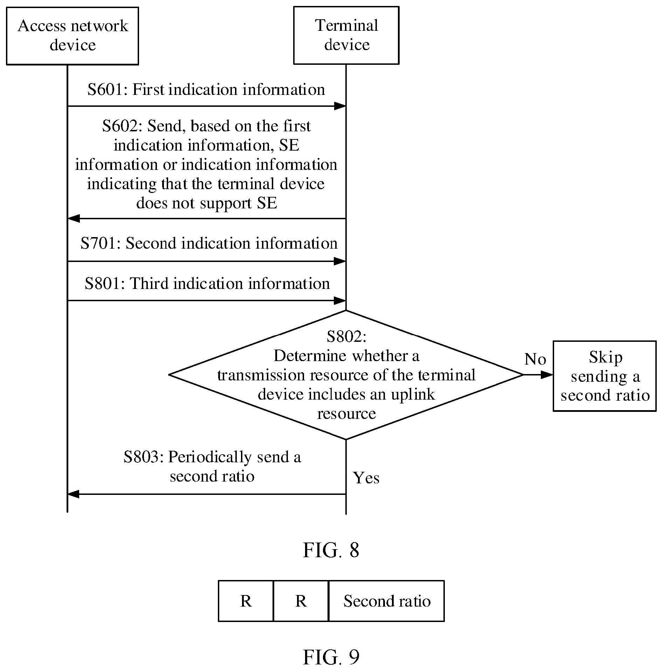

In a possible implementation, with reference to FIG. 7, as shown in FIG. 8, the implementation process in which the terminal device dynamically reports the second ratio based on the periodicity trigger condition may be implemented by using the following S801 to S803.

S801: The access network device sends third indication information to the terminal device. Correspondingly, the terminal device receives the third indication information from the access network device.

The third indication information indicates first preset duration.

In some optional implementations, the third indication information may indicate the first preset duration. For example, the third indication information indicates that the first preset duration is 20 milliseconds (ms). The third indication information may alternatively indicate a first weight value, and the first weight value is used by the terminal device to determine the first preset duration. For example, the third indication information indicates that the first weight value is 0.8.

In a possible implementation, when the terminal device receives the third indication information indicating the first weight value, the terminal device may obtain the first weight value and other preset duration (for example, a power headroom reporting (power headroom reporting, PHR) reporting periodicity (phr-periodic timer) or a PHR detection periodicity (phr-prohibit timer)), and obtain the first preset duration through multiplying the first weight value by the other preset duration.

In an optional implementation, when the third indication information may alternatively indicate the first weight value, the third indication information may be carried in a DCI message, for example, carried in an SE-scale factor (se-Scale Factor) field of the DCI message. The SE-scale factor field may be represented by using a bit. This is not specifically limited in embodiments of this application.

S802: The terminal device determines whether a transmission resource of the terminal device includes an uplink resource.

In a possible implementation, the uplink resource may include a physical uplink shared channel (physical uplink shared channel, PUSCH) resource and/or a physical uplink control channel (physical uplink control channel, PUCCH) resource. Because a transmission priority of the second ratio is low, generally, the uplink resource includes the PUSCH resource.

Further, if the transmission resource of the terminal device includes the uplink resource, the terminal device continues to perform S803.

S803: The terminal device periodically sends the second ratio to the access network device. Correspondingly, the access network device periodically receives the second ratio from the terminal device.

A time interval at which the terminal device sends the second ratio (or a time interval at which the access network device receives the second ratio) is equal to the first preset duration. For the first preset duration, refer to the descriptions of S801. Details are not described herein again.

In a possible implementation, S803 includes: The terminal device obtains a moment (denoted as a moment #1) at which the second ratio is sent most recently, and determines a time interval between the moment #1 and a current moment. When the time interval between the moment #1 and the current moment is equal to the first preset duration, the terminal device may send a second ratio at the current moment to the access network device.

Optionally, when the time interval between the moment #1 and the current moment is longer than the first preset duration, the terminal device may also send the second ratio at the current moment to the access network device.

In a feasible implementation, the second ratio may be configured based on a format of a media access control-channel element (media access control-channel element, MAC-CE). For example, if the second ratio is reported based on the format of the MAC-CE, the second ratio may include two fields: a reserved field and a field that indicates the second ratio.

For example, as shown in FIG. 9, lengths of the foregoing two fields may be one byte (for example, 8 bits). For example, the reserved field is 6 bits, and the field that indicates the second ratio is 2 bits. R shown in FIG. 9 is a reserved bit. Generally, R may be set to 0.

Certainly, the foregoing descriptions are merely example descriptions of the lengths of the reserved field and the field that indicates the second ratio. The reserved field and the field that indicates the second ratio may alternatively have other lengths. For example, the reserved field is 0 bits, and the field that indicates the second ratio is 8 bits. This is not limited in embodiments of this application.

Optionally, the first ratio may alternatively be configured based on the format of the MAC-CE. For a configuration of the first ratio, refer to the foregoing configuration of the second ratio for understanding. Details are not described herein again.

In an optional implementation, the terminal device may report the second ratio in a quantized reporting manner. For example, the terminal device first divides a value range of the second ratio into a plurality of first intervals according to a preset rule, and then marks each of the plurality of first intervals with a number. For example, the terminal device marks a $1^{st}$ first interval in the plurality of first intervals as 0. If the second ratio falls within the $1^{st}$ first interval, the terminal device may report a mark (namely, 0) of the $1^{st}$ first interval to the access network device. In this way, the access network device determines an approximate range of the second ratio based on the mark of the first interval, and selects any value from the approximate range as the second ratio.

For example, as shown in the following Table 1, the terminal device may divide the value range (for example, (0, 1)) of the second ratio into eight first intervals. The foregoing eight first intervals are respectively marked as 0 to 7. A first interval (which may also be referred to as a quantity value of SE (quantity value of SE)) whose mark (which may also be referred to as an index (Index)) is 0 corresponds to (0, 5%], a first interval whose mark is 1 corresponds to [5%, 10%], a first interval whose mark is 2 corresponds to [10%, 15%], a first interval whose mark is 3 corresponds to [15%, 20%], a first interval whose mark is 4 corresponds to [20%, 25%], a first interval whose mark is 5 corresponds to [25%, 30%], a first interval whose mark is 6 corresponds to [30%, 35%], and a first interval whose mark is 7 corresponds to [35%, 100%].

Table 1

| Mark | First interval |
| --- | --- |
| 0 | (0, 5%] |
| 1 | [5%, 10%] |
| 2 | [10%, 15%] |
| 3 | [15%, 20%] |
| 4 | [20%, 25%] |
| 5 | [25%, 30%] |
| 6 | [30%, 35%] |
| 7 | [35%, 100%) |

Optionally, because the coverage indicator may include the first indicator and the second indicator, the terminal device may denote the ratio of the quantity of spectrum resources to be extended for the first frequency domain signal to the quantity of spectrum resources occupied by the first frequency domain signal as a second ratio #1 when the coverage indicator of the terminal device is the first indicator, and denote a ratio of the quantity of spectrum resources to be extended for the first frequency domain signal to the quantity of spectrum resources occupied by the first frequency domain signal as a second ratio #2 when the coverage indicator of the terminal device is the second indicator. In this case, the terminal device may report the second ratio #1 and the second ratio #2 to the access network device in a quantized manner. In addition, if the symbol location is implemented in a manner of a ratio, the terminal device may also report the symbol location to the access network device in the foregoing quantized manner.

It may be understood that, if the terminal device reports the second ratio and/or the symbol location in the foregoing quantized manner, a bit (bit) occupied by the second ratio and/or the symbol location may be controlled within a small range (for example, 2 or 3 bits). In this way, a number of transmitted bits can be reduced, and transmission load of the communication system is reduced.

In another optional implementation, both the second ratio #2 and the symbol location (the symbol location is implemented in a manner of the ratio) have a value relationship with the second ratio #1. The value relationship is that the second ratio #1 is greater than or equal to the second ratio #2, and the second ratio #1 is greater than or equal to the symbol location. Therefore, the second ratio #1 may be quantized and reported by using the method shown in Table 1. The second ratio #2 and the symbol location may be quantized and reported in a difference-based interval division manner. In this way, a number of transmitted bits can be further reduced. For example, an example in which the second ratio #2 is quantized and reported in a difference-based interval division manner is used for description. The terminal device determines a value range of a difference between the second ratio #2 and the second ratio #1, divides the value range of the difference between the second ratio #2 and the second ratio #1 into a plurality of second intervals, and marks each of the plurality of second intervals with a number. Further, the terminal device determines a mark of a second interval with which the second ratio falls, and reports the mark to the access network device.

For example, as shown in the following Table 2, the terminal device may divide the value range (for example, (0, 1)) of the difference between the second ratio #2 and the second ratio #1 into eight second intervals. The foregoing eight second intervals are respectively marked as 8 to 15. A second interval whose mark is 8 corresponds to (0, 10%], a second interval whose mark is 9 corresponds to [10%, 20%], a second interval whose mark is 10 corresponds to [20%, 30%], a second interval whose mark is 11 corresponds to [30%, 40%], a second interval whose mark is 12 corresponds to [40%, 50%], a second interval whose mark is 13 corresponds to [50%, 60%], a second interval whose mark is 14 corresponds to [60%, 70%], and a second interval whose mark is 15 corresponds to [70%, 100%).

Table 2

| Mark | Second interval |
| --- | --- |
| 8 | [0, 10%] |

(continued)

| Mark | Second interval |
|------|-----------------|
| 9 | [10%, 20%] |
| 10 | [20%, 30%] |
| 11 | [30%, 40%] |
| 12 | [40%, 50%] |
| 13 | [50%, 60%] |
| 14 | [60%, 70%] |
| 15 | [70%, 100%) |

Optionally, for an implementation process in which the symbol location is quantized and reported in a difference-based interval division manner, refer to the foregoing implementation process in which the second ratio #2 is quantized and reported in the difference-based interval division manner. Details are not described herein again.

It may be understood that the terminal device reports the second ratio #1, so that the access network device can indicate the terminal device to extend the first frequency domain signal based on the second ratio #1. In this way, a coverage capability of a communication link for transmitting the first frequency domain signal can be extended to the highest. The terminal device reports the second ratio #2, so that the access network device can indicate the terminal device to extend the first frequency domain signal based on the second ratio #2. In this way, not only a coverage capability of a communication link for transmitting the first frequency domain signal can be improved, but also a bandwidth resource of the communication system can be efficiently occupied. Therefore, the bandwidth resource of the communication system is saved, and spectrum resource utilization is improved. The terminal device reports the symbol location, so that the access network device can indicate the terminal device to demodulate the first frequency domain signal or determine the extended first frequency domain signal based on the symbol location, to implement spectral extension of the first frequency domain signal, so as to improve a coverage capability.

In a possible implementation, the second ratio #1 (denoted as the ratio of the quantity of spectrum resources to be extended for the first frequency domain signal to the quantity of spectrum resources occupied by the first frequency domain signal when the coverage indicator of the terminal device is the first indicator) may not change with a channel state, so that in a scenario in which only the channel state changes, the terminal device may not dynamically report the second ratio #1 when the first indicator condition includes the first indicator. This can reduce communication overheads. This implementation is also applicable to a scenario in Embodiment 2 and a scenario in Embodiment 3.

Optionally, if the transmission resource of the terminal device does not include the uplink transmission resource, the terminal device does not send the second ratio to the access network device when an interval at which the terminal device sends the second ratio is longer than or equal to the first preset duration. In addition, the terminal device may reset and turn off a timer used to count the time interval at which the terminal device sends the second ratio, and does not restart the timer used to count the time interval at which the terminal device sends the second ratio until the terminal device determines that the transmission resource of the terminal device includes the uplink transmission resource.

Embodiment 2

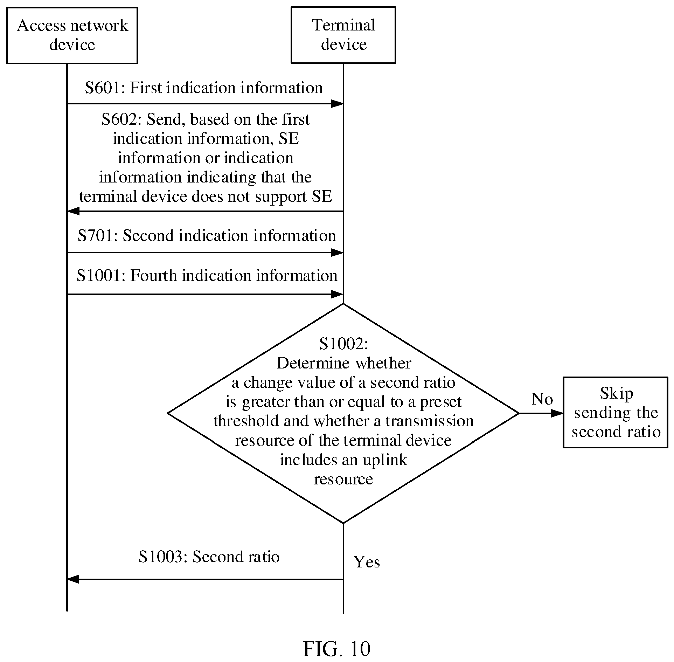

In a possible implementation, with reference to FIG. 7, as shown in FIG. 10, the implementation process in which the terminal device dynamically reports the second ratio based on the event may be implemented by using the following S1001 to S1003.

S1001: The access network device sends fourth indication information to the terminal device. Correspondingly, the terminal device receives the fourth indication information from the access network device.

The fourth indication information indicates a preset threshold.

In some optional implementations, the fourth indication information may indicate a preset threshold. For example, the fourth indication information indicates that the preset threshold is 0.1. The fourth indication information may alternatively indicate a second weight value, and the second weight value is used by the terminal device to determine the preset threshold. For example, the fourth indication information indicates that the second weight value is 0.7.

In a possible implementation, when the terminal device receives the fourth indication information indicating the second weight value, the terminal device may obtain the second weight value and another preset threshold (for example, a PHR change threshold (phr-Tx-power factor change)), and obtain the preset threshold through multiplying the second weight value by the another preset threshold.

S1002: The terminal device determines whether a change value of the second ratio is greater than or equal to the preset threshold and whether a transmission resource of the terminal device includes an uplink resource.

In a possible implementation, the change value of the second ratio may be a difference between a second ratio reported most recently and a second ratio at a current moment.

Further, if the change value of the second ratio is greater than or equal to the preset threshold and the transmission resource of the terminal device includes the uplink resource, the terminal device continues to perform S1003.

S1003: The terminal device sends the second ratio to the access network device. Correspondingly, the access network device receives the second ratio from the terminal device.

Optionally, for an implementation in which the terminal device sends the second ratio to the access network device, refer to the descriptions of S803. Details are not described herein again.

In a possible implementation, if the change value of the second ratio is less than the preset threshold, and/or the transmission resource of the terminal device does not include the uplink resource, the terminal device does not send the second ratio to the access network device.

Embodiment 3

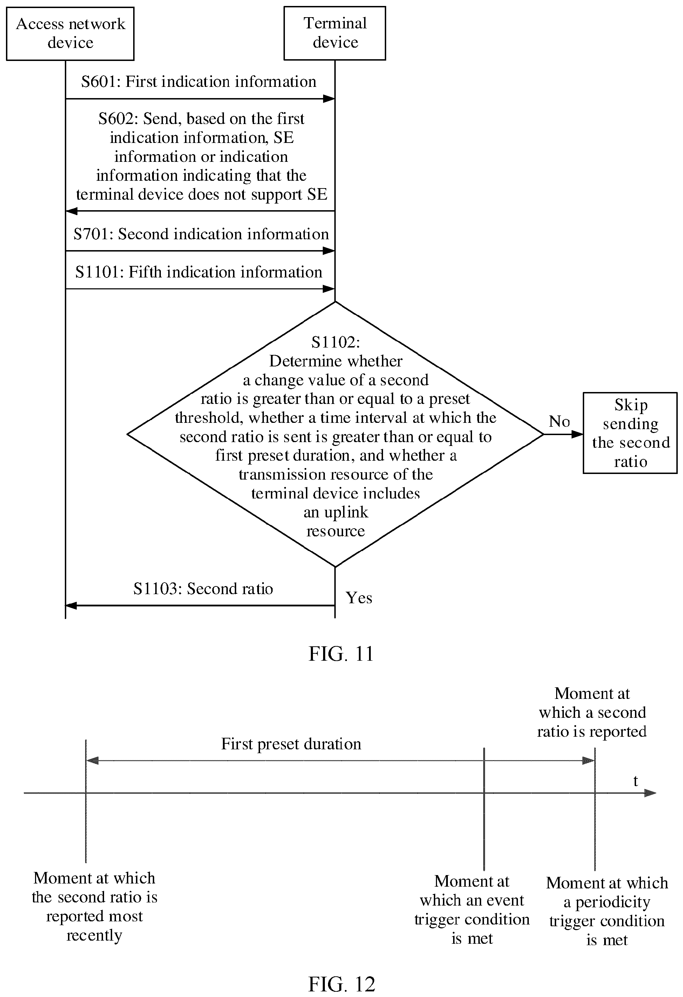

In a possible implementation, with reference to FIG. 7, as shown in FIG. 11, the implementation process in which the terminal device dynamically reports the second ratio based on the periodicity and the event may be implemented by using the following S1101 to S1103.

S1101: The access network device sends fifth indication information to the terminal device. Correspondingly, the terminal device receives the fifth indication information from the access network device.

The fifth indication information indicates first preset duration and a preset threshold.

In some optional implementations, the first preset duration may change with a scenario. For example, the first preset duration in Embodiment 1 may be longer than the first preset duration in Embodiment 3. Certainly, the first preset duration may alternatively not change with a scenario. For example, the first preset duration in Embodiment 1 is the same as the first preset duration in Embodiment 3.

S1102: The terminal device determines whether a change value of the second ratio is greater than or equal to the preset threshold, whether a time interval at which the second ratio is sent is longer than or equal to the first preset duration, and whether a transmission resource of the terminal device includes an uplink resource.

In a possible implementation, S1102 includes: The terminal device determines whether a difference (namely, the change value of the second ratio) between a second ratio reported most recently and a second ratio at a current moment is greater than or equal to the preset threshold. If the change value of the second ratio is greater than or equal to the preset threshold, the terminal device further determines whether a time interval (namely, the time interval at which the second ratio is sent) between a moment at which the second ratio is reported most recently and the current moment is greater than the first preset threshold. If the time interval at which the second ratio is sent is longer than or equal to the first preset duration, the terminal device further determines whether the transmission resource of the terminal device includes the uplink resource. Certainly, the foregoing implementation is merely an example sequence. The terminal device may alternatively determine, in another manner, whether the change value of the second ratio is greater than or equal to the preset threshold, whether the time interval at which the second ratio is sent is greater than or equal to the first preset duration, and whether the transmission resource of the terminal device includes the uplink resource. This is not specifically limited in embodiments of this application.

Further, if the change value of the second ratio is greater than or equal to the preset threshold, the time interval at which the second ratio is sent is equal to the first preset duration, and the transmission resource of the terminal device includes the uplink resource, the terminal device continues to perform S1103.

S1103: The terminal device sends the second ratio to the access network device. Correspondingly, the access network device receives the second ratio from the terminal device.

In Embodiment 3, as shown in FIG. 12, the terminal device sends the second ratio to the access network device when all the following three conditions are met: The change value of the second ratio is greater than or equal to the preset threshold (that is, the event trigger condition is met), the time interval at which the terminal device sends the second ratio is longer than or equal to the first preset duration (that is, the periodicity trigger condition is met), and the transmission resource of the terminal device includes the uplink resource. If only any one or any two of the foregoing three conditions are met, the terminal device does not send the second ratio to the access network device. This can avoid frequent reporting triggered based on an event, thereby reducing communication overheads.

The foregoing mainly describes the solutions in embodiments of this application from a perspective of a method. It may be understood that, to implement the foregoing functions, a communication apparatus includes a corresponding hardware structure and/or software modules for performing the functions. A person skilled in the art should easily be aware that, in combination with units and algorithm steps of the examples described in embodiments disclosed in this specification, embodiments of this application may be implemented by hardware or a combination of hardware and computer software. Whether a function is implemented by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the communication apparatus may be divided into functional units based on the foregoing method examples. For example, each functional unit corresponding to each function may be obtained through division, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, another division manner may be used.

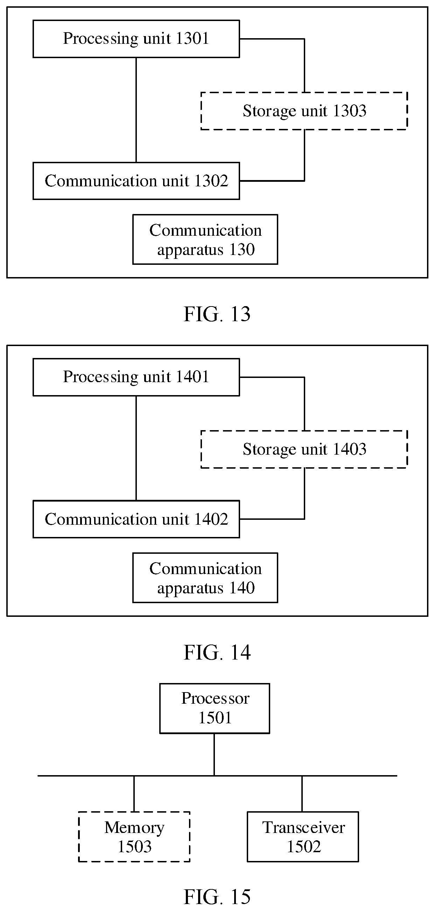

An embodiment of this application provides a communication apparatus (denoted as a communication apparatus 130). As shown in FIG. 13, the communication apparatus 130 includes a processing unit 1301 and a communication unit 1302. Optionally, the apparatus further includes a storage unit 1303. The storage unit 1303 is configured to store program code and data of the communication apparatus 130.

The processing unit 1301 is configured to indicate the communication unit 1302 to perform the following actions: receiving first indication information from an access network device, and sending, based on the first indication information, SE information or indication information indicating that a terminal device does not support SE to the access network device. The first indication information indicates the terminal device to send the SE information. The SE information is used to demodulate a first frequency domain signal. The first frequency domain signal is a frequency domain signal obtained by performing discrete Fourier transform on data transmitted between the terminal device and the access network device.

In a possible implementation, the SE information indicates a first ratio. The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition.

In a possible implementation, the SE information further indicates a symbol location. The symbol location is a ratio of a quantity of spectrum resources to be extended before a 1st subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol in the first frequency domain signal.

In a possible implementation, the SE information indicates type information. The type information represents a type of an FDSS filter of the terminal device, and a type of one FDSS filter corresponds to one or more first ratios and one or more symbol locations. The first ratio is the ratio of the quantity of first spectrum resources to the quantity of spectrum resources occupied by the first frequency domain signal. The quantity of first spectrum resources is the quantity of spectrum resources to be extended for the first frequency domain signal when the coverage indicator of the terminal device at the first moment meets the first indicator condition. The symbol location is the ratio of the quantity of spectrum resources to be extended before the 1st subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal.

In a possible implementation, the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

In a possible implementation, the processing unit 1301 is further configured to indicate the communication unit 1302 to receive second indication information from the access network device. The second indication information indicates the terminal device to dynamically report a second ratio. The second ratio is a ratio of a quantity of second spectrum resources to the quantity of spectrum resources occupied by the first frequency domain signal. The quantity of second spectrum resources is a quantity of spectrum resources to be extended for the first frequency domain signal when the coverage indicator of the terminal device meets the first indicator condition.

In a possible implementation the processing unit 1301 is further configured to indicate the communication unit 1302 to periodically send the second ratio to the access network device when a transmission resource of the terminal device includes an uplink resource. A time interval at which the second ratio is sent is equal to first preset duration.

In a possible implementation, the processing unit 1301 is further configured to indicate the communication unit 1302 to receive third indication information from the access network device. The third indication information indicates the first preset duration.

In a possible implementation, the processing unit 1301 is further configured to indicate the communication unit 1302 to send the second ratio to the access network device when a change value of the second ratio is greater than or equal to a preset threshold and the transmission resource of the terminal device includes the uplink resource.

In a possible implementation, the processing unit 1301 is further configured to indicate the communication unit 1302 to receive fourth indication information from the access network device. The fourth indication information indicates the preset threshold.

In a possible implementation, the first indicator condition is that the coverage indicator is between a first indicator and a second indicator. Alternatively, the first indicator condition is that the coverage indicator is a first indicator and/or a second indicator. The first indicator is a coverage indicator of the terminal device when a coverage capability of the terminal device is the strongest, and the second indicator is a coverage indicator of the terminal device when the coverage capability of the terminal device is a preset coverage capability.

In a possible implementation, the third indication information includes the first preset duration. Alternatively, the third indication information includes a first weight value, and the first weight value is used to determine the first preset duration.

In a possible implementation, the fourth indication information includes the preset threshold. Alternatively, the fourth indication information includes a second weight value, and the second weight value is used to determine the preset threshold.

In a possible implementation, the second indication information is carried in downlink control information, and the first indication information is carried in a user equipment capability enquiry message.

An embodiment of this application further provides a communication apparatus (denoted as a communication apparatus 140). As shown in FIG. 14, the communication apparatus 140 includes a processing unit 1401 and a communication unit 1402. Optionally, the apparatus further includes a storage unit 1403. The storage unit 1403 is configured to store program code and data of the communication apparatus 140.

The processing unit 1401 is configured to indicate the communication unit 1402 to perform the following actions: sending first indication information to a terminal device, and receiving indication information indicating that SE is not supported from the terminal device, or receiving SE information from the terminal device. The first indication information indicates the terminal device to send the SE information. The SE information is used to demodulate a first frequency domain signal. The first frequency domain signal is a frequency domain signal obtained by performing discrete Fourier transform on data transmitted between the terminal device and an access network device.

In a possible implementation, the SE information indicates a first ratio. The first ratio is a ratio of a quantity of first spectrum resources to a quantity of spectrum resources occupied by the first frequency domain signal. The quantity of first spectrum resources is a quantity of spectrum resources to be extended for the first frequency domain signal when a coverage indicator of the terminal device at a first moment meets a first indicator condition.

In a possible implementation, the processing unit 1401 is further configured to demodulate the first frequency domain signal based on the first ratio and a preconfigured symbol location. The symbol location is a ratio of a quantity of spectrum resources to be extended before a 1st subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

In a possible implementation, the SE information further indicates a symbol location. The symbol location is a ratio of a quantity of spectrum resources to be extended before a 1st subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

In a possible implementation, the processing unit 1401 is further configured to demodulate the first frequency domain signal based on the first ratio and the symbol location.

In a possible implementation, the SE information indicates type information. The type information represents a type of an FDSS filter of the terminal device, and a type of one FDSS filter corresponds to one or more first ratios and one or more symbol locations. The first ratio is the ratio of the quantity of first spectrum resources to the quantity of spectrum resources occupied by the first frequency domain signal. The quantity of first spectrum resources is the quantity of spectrum resources to be extended for the first frequency domain signal when the coverage indicator of the terminal device at the first moment meets the first indicator condition. The symbol location is the ratio of the quantity of spectrum resources to be extended before the 1st subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal.

In a possible implementation, the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

In a possible implementation, the processing unit 1401 is further configured to perform the following operations: determining a target first ratio, a target symbol location, and a target third ratio from the one or more first ratios, the one or more symbol locations, and the one or more third ratios corresponding to the type of the FDSS filter, and demodulating the first frequency domain signal based on the target first ratio, the target symbol location, and the target third ratio.

In a possible implementation, the processing unit 1401 is further configured to perform the following operations: determining the target first ratio and the target symbol location from the one or more first ratios and the one or more symbol locations corresponding to the type of the FDSS filter, and demodulating the first frequency domain signal based on the target first ratio and the target symbol location.

In a possible implementation, the processing unit 1401 is further configured to indicate the communication unit 1402 to send second indication information to the terminal device. The second indication information indicates the terminal device to dynamically report a second ratio. The second ratio is a ratio of a quantity of second spectrum resources to the quantity of spectrum resources occupied by the first frequency domain signal, where the quantity of second spectrum resources is a quantity of spectrum resources to be extended for the first frequency domain signal when the coverage indicator of the terminal device meets the first indicator condition.

In a possible implementation, the processing unit 1401 is further configured to indicate the communication unit 1402 to periodically receive the second ratio from the terminal device. A time interval at which the second ratio is received is equal to first preset duration. The processing unit 1401 is further configured to demodulate the first frequency domain signal based on the second ratio.

In a possible implementation, the processing unit 1401 is further configured to indicate the communication unit 1402 to send third indication information to the terminal device. The third indication information indicates the first preset duration.

In a possible implementation, the processing unit 1401 is further configured to indicate the communication unit 1402 to receive the second ratio from the terminal device. A change value of the second ratio is greater than or equal to a preset threshold. The processing unit 1401 is further configured to demodulate the first frequency domain signal based on the second ratio.

In a possible implementation, the processing unit is further configured to indicate the communication unit to send fourth indication information to the terminal device. The fourth indication information indicates the preset threshold.

In a possible implementation, the first indicator condition is that the coverage indicator is between a first indicator and a second indicator. Alternatively, the first indicator condition is that the coverage indicator is a first indicator and/or a second indicator. The first indicator is a coverage indicator of the terminal device when a coverage capability of the terminal device is the strongest, and the second indicator is a coverage indicator of the terminal device when the coverage capability of the terminal device is a preset coverage capability.

In a possible implementation, the third indication information includes the first preset duration. Alternatively, the third indication information includes a first weight value, and the first weight value is used to determine the first preset duration.

In a possible implementation, the fourth indication information includes the preset threshold. Alternatively, the fourth indication information includes a second weight value, and the second weight value is used to determine the preset threshold.

In a possible implementation, the second indication information is carried in downlink control information, and the first indication information is carried in a user equipment capability enquiry message.

The units in FIG. 13 and FIG. 14 may alternatively be referred to as modules. For example, the processing unit may be referred to as a processing module. In addition, in the embodiments shown in FIG. 13 and FIG. 14, names of the units may not be names shown in the figures. For example, the communication unit may be referred to as a transceiver unit.

When the units in FIG. 13 and FIG. 14 are implemented in a form of software functional modules and sold or used as independent products, the units may be stored in a computer-readable storage medium. Based on such an understanding, the technical solutions in embodiments of this application essentially, or the part contributing to the conventional technology, or all or a part of the technical solutions may be implemented in a form of a software product. The computer software product is stored in a storage medium, and includes a plurality of instructions for instructing a computer device (which may be, for example, a personal computer, a server, or a network device) or a processor (processor) to perform all or a part of the steps of the methods described in embodiments of this application. A storage medium for storing the computer software product includes any medium that can store program code, such as a USB flash drive, a removable hard disk, a read-only memory (read-only memory, ROM), a random access memory (random access memory, RAM), a magnetic disk, or an optical disc.

An embodiment of this application further provides a diagram of a hardware structure of a communication apparatus. Refer to FIG. 15. The communication apparatus includes a processor 1501 and a transceiver 1502, and optionally, further includes a memory 1503 connected to the processor 1501.

The processor 1501 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 1501 may alternatively include a plurality of CPUs, and the processor 1501 may be a single-core (single-CPU) processor or a multi-core (multi-CPU) processor. The processor herein may be one or more devices, circuits, or processing cores configured to process data (for example, computer program instructions).

The processor 1501, the memory 1503, and the transceiver 1502 are connected to each other through a bus. The transceiver 1502 is configured to communicate with another communication device. Optionally, the transceiver 1502 may include a transmitter and a receiver. A component configured to implement a receiving function in the transceiver 1502 may be considered as a receiver. The receiver is configured to perform a receiving step in embodiments of this application. A component configured to implement a sending function in the transceiver 1502 may be considered as a transmitter. The transmitter is configured to perform a sending step in embodiments of this application.

In a first possible implementation, as shown in FIG. 15, the communication apparatus further includes the transceiver 1502. The memory 1503 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. This is not limited in embodiments of this application. The memory 1503 may exist independently, or may be integrated with the processor 1501. The memory 1503 may include computer program code. The processor 1501 is configured to execute the computer program code stored in the memory 1503, to implement the methods provided in embodiments of this application.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a chip, including a processor and an interface. The processor is coupled to a memory through the interface. When the processor executes a computer program or instructions in the memory, any one of the methods provided in the foregoing embodiments is performed.

An embodiment of this application further provides a communication system, including the terminal device and the access network device in the foregoing embodiments.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD for short)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, the term "comprise" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effect.

Although this application is described with reference to features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and equivalent technologies thereof.

The foregoing descriptions are merely implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a terminal device and comprising:

   receiving first indication information from an access network device, wherein the first indication information indicates the terminal device to send spectral extension SE information, the SE information is used to demodulate a first frequency domain signal, and the first frequency domain signal is a frequency domain signal obtained by performing discrete Fourier transform on data transmitted between the terminal device and the access network device; and
   sending, based on the first indication information, the SE information or indication information indicating that the terminal device does not support SE to the access network device.

2. The method according to claim 1, wherein the SE information indicates a first ratio; the first ratio is a ratio of a quantity of first spectrum resources to a quantity of spectrum resources occupied by the first frequency domain signal; and the quantity of first spectrum resources is a quantity of spectrum resources to be extended for the first frequency domain signal when a coverage indicator of the terminal device at a first moment meets a first indicator condition.

3. The method according to claim 2, wherein the SE information further indicates a symbol location; and the symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol in the first frequency domain signal.

4. The method according to any one of claims 1 to 3, wherein the SE information indicates type information; the type information represents a type of a frequency-domain spectral shaping FDSS filter of the terminal device, and a type of one FDSS filter corresponds to one or more first ratios and one or more symbol locations; the first ratio is the ratio of the quantity of first spectrum resources to the quantity of spectrum resources occupied by the first frequency domain signal; the quantity of first spectrum resources is the quantity of spectrum resources to be extended for the first frequency domain signal when the coverage indicator of the terminal device at the first moment meets the first indicator condition; and the symbol location is the ratio of the quantity of spectrum resources to be extended before the $1^{st}$ subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal.

5. The method according to claim 4, wherein the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

6. The method according to any one of claims 1 to 5, wherein the method further comprises:
   receiving second indication information from the access network device, wherein the second indication information indicates the terminal device to dynamically report a second ratio; and the second ratio is a ratio of a quantity of second spectrum resources to the quantity of spectrum resources occupied by the first frequency domain signal, wherein the quantity of second spectrum resources is a quantity of spectrum resources to be extended for the first frequency domain signal when the coverage indicator of the terminal device meets the first indicator condition.

7.  The method according to claim 6, wherein the method further comprises:
    periodically sending the second ratio to the access network device when a transmission resource of the terminal device comprises an uplink resource, wherein a time interval at which the second ratio is sent is equal to first preset duration.

8.  The method according to claim 7, wherein the method further comprises:
    receiving third indication information from the access network device, wherein the third indication information indicates the first preset duration.

9.  The method according to any one of claims 6 to 8, wherein the method further comprises:
    sending the second ratio to the access network device when a change value of the second ratio is greater than or equal to a preset threshold and the transmission resource of the terminal device comprises the uplink resource.

10. The method according to claim 9, wherein the method further comprises:
    receiving fourth indication information from the access network device, wherein the fourth indication information indicates the preset threshold.

11. The method according to any one of claims 2 to 10, wherein the first indicator condition is that the coverage indicator is between a first indicator and a second indicator; or

    the first indicator condition is that the coverage indicator is the first indicator and/or the second indicator, wherein the first indicator is a coverage indicator of the terminal device when a coverage capability of the terminal device is strongest, and the second indicator is a coverage indicator of the terminal device when the coverage capability of the terminal device is a preset coverage capability.

12. A communication method, applied to an access network device and comprising:

    sending first indication information to a terminal device, wherein the first indication information indicates the terminal device to send spectral extension SE information, the SE information is used to demodulate a first frequency domain signal, and the first frequency domain signal is a frequency domain signal obtained by performing discrete Fourier transform on data transmitted between the terminal device and the access network device; and
    receiving indication information indicating that SE is not supported from the terminal device, or receiving the SE information from the terminal device.

13. The method according to claim 12, wherein the SE information indicates a first ratio; the first ratio is a ratio of a quantity of first spectrum resources to a quantity of spectrum resources occupied by the first frequency domain signal; and the quantity of first spectrum resources is a quantity of spectrum resources to be extended for the first frequency domain signal when a coverage indicator of the terminal device at a first moment meets a first indicator condition.

14. The method according to claim 13, wherein the method further comprises:
    demodulating the first frequency domain signal based on the first ratio and a preconfigured symbol location, wherein the symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

15. The method according to claim 13, wherein the SE information further indicates a symbol location; and the symbol location is a ratio of a quantity of spectrum resources to be extended before a $1^{st}$ subcarrier of the first frequency domain signal or after a last subcarrier of the first frequency domain signal at the first moment to the quantity of spectrum resources occupied by the first frequency domain signal, or the symbol location represents a location of a subcarrier occupied by any symbol that is in the first frequency domain signal and that is preconfigured for the first frequency domain signal.

16. The method according to claim 15, wherein the method further comprises:
demodulating the first frequency domain signal based on the first ratio and the symbol location.

17. The method according to any one of claims 12 to 16, wherein the SE information indicates type information; the type information represents a type of a frequency-domain spectral shaping FDSS filter of the terminal device, and a type of one FDSS filter corresponds to one or more first ratios and one or more symbol locations; the first ratio is the ratio of the quantity of first spectrum resources to the quantity of spectrum resources occupied by the first frequency domain signal; the quantity of first spectrum resources is the quantity of spectrum resources to be extended for the first frequency domain signal when the coverage indicator of the terminal device at the first moment meets the first indicator condition; and the symbol location is the ratio of the quantity of spectrum resources to be extended before the $1^{st}$ subcarrier of the first frequency domain signal or after the last subcarrier of the first frequency domain signal at the first moment to the quantity of spectrum resources occupied by the first frequency domain signal, or the symbol location represents the location of the subcarrier occupied by the any symbol in the first frequency domain signal.

18. The method according to claim 17, wherein the method further comprises:

    determining a target first ratio and a target symbol location from the one or more first ratios and the one or more symbol locations corresponding to the type of the FDSS filter; and
    demodulating the first frequency domain signal based on the target first ratio and the target symbol location.

19. The method according to claim 17 or 18, wherein the type of the one FDSS filter further corresponds to one or more third ratios; the third ratio is a ratio of a first parameter to a sum of the first parameter and a second parameter; the first parameter is a sum of squares of FDSS filter coefficients corresponding to one or more first spectrum resources; the second parameter is a sum of squares of FDSS filter coefficients corresponding to one or more second spectrum resources; the first spectrum resource is a spectrum resource to be extended for the first frequency domain signal when the coverage indicator of the terminal device at the first moment meets the first indicator condition; and the second spectrum resource is a spectrum resource in the first frequency domain signal.

20. The method according to claim 19, wherein the method further comprises:

    determining the target first ratio, the target symbol location, and a target third ratio from the one or more first ratios, the one or more symbol locations, and the one or more third ratios corresponding to the type of the FDSS filter; and
    demodulating the first frequency domain signal based on the target first ratio, the target symbol location, and the target third ratio.

21. The method according to any one of claims 12 to 20, wherein the method further comprises:
sending second indication information to the terminal device, wherein the second indication information indicates the terminal device to dynamically report a second ratio; and the second ratio is a ratio of a quantity of second spectrum resources to the quantity of spectrum resources occupied by the first frequency domain signal, wherein the quantity of second spectrum resources is a quantity of spectrum resources to be extended for the first frequency domain signal when the coverage indicator of the terminal device meets the first indicator condition.

22. The method according to claim 21, wherein the method further comprises:

    periodically receiving the second ratio from the terminal device, wherein a time interval at which the second ratio is received is equal to first preset duration; and
    demodulating the first frequency domain signal based on the second ratio.

23. The method according to claim 22, wherein the method further comprises:
sending third indication information to the terminal device, wherein the third indication information indicates the first preset duration.

24. The method according to any one of claims 21 to 23, wherein the method further comprises:

    receiving the second ratio from the terminal device, wherein a change value of the second ratio is greater than or equal to a preset threshold; and
    demodulating the first frequency domain signal based on the second ratio.

25. The method according to claim 24, wherein the method further comprises:
sending fourth indication information to the terminal device, wherein the fourth indication information indicates the preset threshold.

26. The method according to any one of claims 13 to 25, wherein the first indicator condition is that the coverage indicator is between a first indicator and a second indicator; or

   the first indicator condition is that the coverage indicator is the first indicator and/or the second indicator, wherein the first indicator is a coverage indicator of the terminal device when a coverage capability of the terminal device is strongest, and the second indicator is a coverage indicator of the terminal device when the coverage capability of the terminal device is a preset coverage capability.

27. A communication apparatus, comprising a functional unit configured to perform the method according to any one of claims 1 to 11, wherein an action performed by the functional unit is implemented by hardware or implemented by hardware executing corresponding software.

28. A communication apparatus, comprising a functional unit configured to perform the method according to any one of claims 12 to 26, wherein an action performed by the functional unit is implemented by hardware or implemented by hardware executing corresponding software.

29. A communication apparatus, comprising a processor, wherein
the processor is connected to a memory, the memory is configured to store computer-executable instructions, and the processor executes the computer-executable instructions stored in the memory, so that the communication apparatus implements the method according to any one of claims 1 to 11.

30. A communication apparatus, comprising a processor, wherein
the processor is connected to a memory, the memory is configured to store computer-executable instructions, and the processor executes the computer-executable instructions stored in the memory, so that the communication apparatus implements the method according to any one of claims 12 to 26.

31. A computer-readable storage medium, comprising instructions, wherein when the instructions are run on a computer, the computer is enabled to perform the method according to any one of claims 1 to 11, or perform the method according to any one of claims 12 to 26.

32. A computer program product, comprising instructions, wherein when the instructions are run on a computer, the computer is enabled to perform the method according to any one of claims 1 to 11, or perform the method according to any one of claims 12 to 26.

33. A communication system, comprising a terminal device configured to perform the method according to any one of claims 1 to 11 and an access network device configured to perform the method according to any one of claims 12 to 26.

FIG. 1

Determine 2M data bits — S201

Perform quadrature phase shift keying modulation on the 2M data bits to obtain M modulated symbols — S202

Perform discrete Fourier transform on each of the M modulated symbols, to obtain frequency domain symbols — S203

Map the frequency domain symbols to M subcarriers — S204

Add N–M 0s after a last subcarrier of the M subcarriers in a frequency domain signal obtained through mapping, to obtain a frequency domain signal obtained through adding, and perform inverse fast Fourier transform on the frequency domain signal obtained through adding, to obtain a time domain signal — S205

Process the time domain signal to obtain a data signal, and then perform digital-to-analog conversion on the data signal to obtain an analog signal — S206

Send the analog signal to an access network device through an antenna — S207

FIG. 2

To-be-extended frequency domain signal

Extended frequency domain signal

FIG. 3

Frequency domain signal

Filter coefficient

Frequency domain signal obtained through frequency-domain spectral shaping

FIG. 4

FIG. 5

FIG. 6

FIG. 7

Access network device

Terminal device

S601: First indication information

S602: Send, based on the first indication information, SE information or indication information indicating that the terminal device does not support SE

S701: Second indication information

S801: Third indication information

S802:
Determine whether a transmission resource of the terminal device includes an uplink resource

No → Skip sending a second ratio

S803: Periodically send a second ratio

Yes

FIG. 8

| R | R | Second ratio |
|---|---|---|

FIG. 9

Access network device

Terminal device

S601: First indication information

S602: Send, based on the first indication information, SE information or indication information indicating that the terminal device does not support SE

S701: Second indication information

S1001: Fourth indication information

S1002: Determine whether a change value of a second ratio is greater than or equal to a preset threshold and whether a transmission resource of the terminal device includes an uplink resource

No

Skip sending the second ratio

S1003: Second ratio

Yes

FIG. 10

| Access network device | | Terminal device |
|---|---|---|

S601: First indication information →

S602: Send, based on the first indication information, SE information or indication information indicating that the terminal device does not support SE ←

S701: Second indication information →

S1101: Fifth indication information →

S1102: Determine whether a change value of a second ratio is greater than or equal to a preset threshold, whether a time interval at which the second ratio is sent is greater than or equal to first preset duration, and whether a transmission resource of the terminal device includes an uplink resource

No → Skip sending the second ratio

S1103: Second ratio ← Yes

**FIG. 11**

First preset duration

Moment at which a second ratio is reported

t →

Moment at which the second ratio is reported most recently

Moment at which an event trigger condition is met

Moment at which a periodicity trigger condition is met

**FIG. 12**

FIG. 13

FIG. 14

FIG. 15

## INTERNATIONAL SEARCH REPORT

| International application No. |
|---|
| **PCT/CN2023/104244** |

**A.    CLASSIFICATION OF SUBJECT MATTER**

H04L27/26(2006.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN, WPABSC: 频谱扩展, 能力, 支持, 指示, 频域频谱整形, spectral extension, SE, capability, capable, ability, indicator, FDSS

**C.    DOCUMENTS CONSIDERED TO BE RELEVANT**

| Category* | Citation of document, with indication, where appropriate, of the relevant passages | Relevant to claim No. |
|---|---|---|
| X | CN 112449429 A (CHENGDU HUAWEI TECHNOLOGIES CO., LTD.) 05 March 2021 (2021-03-05) description, paragraphs [0113]-[0265] | 1, 12, 27-33 |
| A | WO 2021233550 A1 (NOKIA TECHNOLOGIES OY) 25 November 2021 (2021-11-25) entire document | 1-33 |
| A | CN 113170309 A (SONY CORP.) 23 July 2021 (2021-07-23) entire document | 1-33 |
| A | US 2022052894 A1 (LG ELECTRONICS INC.) 17 February 2022 (2022-02-17) entire document | 1-33 |
| A | QUALCOMM INC. "Potential coverage enhancement techniques for PUSCH" *3GPP TSG-RAN WG1 Meeting #103e, R1-2009729*, 13 November 2020 (2020-11-13), entire document | 1-33 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 August 2023** | **13 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104244**

| Patent document cited in search report | | | Publication date (day/month/year) | Patent family member(s) | | | Publication date (day/month/year) |
|---|---|---|---|---|---|---|---|
| CN | 112449429 | A | 05 March 2021 | WO | 2021043137 | A1 | 11 March 2021 |
| | | | | US | 2022271983 | A1 | 25 August 2022 |
| | | | | EP | 4024986 | A1 | 06 July 2022 |
| | | | | EP | 4024986 | A4 | 19 October 2022 |
| WO | 2021233550 | A1 | 25 November 2021 | EP | 4154485 | A1 | 29 March 2023 |
| | | | | US | 2023188396 | A1 | 15 June 2023 |
| CN | 113170309 | A | 23 July 2021 | US | 2022053505 | A1 | 17 February 2022 |
| | | | | EP | 3902306 | A1 | 27 October 2021 |
| | | | | EP | 3902306 | A4 | 25 May 2022 |
| | | | | JP | 2022514716 | A | 14 February 2022 |
| | | | | WO | 2020125575 | A1 | 25 June 2020 |
| | | | | CN | 111356139 | A | 30 June 2020 |
| US | 2022052894 | A1 | 17 February 2022 | EP | 3917066 | A1 | 01 December 2021 |
| | | | | EP | 3917066 | A4 | 30 March 2022 |
| | | | | WO | 2020167076 | A1 | 20 August 2020 |
| | | | | KR | 20210113411 | A | 15 September 2021 |
| | | | | CN | 113439413 | A | 24 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211036197